(19) Europäisches Patentamt / European Patent Office / Office européen des brevets

(11) **EP 4 113 780 A1**

(12) **EUROPEAN PATENT APPLICATION**
published in accordance with Art. 153(4) EPC

(43) Date of publication:
**04.01.2023   Bulletin 2023/01**

(21) Application number: **21772557.1**

(22) Date of filing: **08.03.2021**

(51) International Patent Classification (IPC):
**H02J 7/00** (2006.01)

(52) Cooperative Patent Classification (CPC):
**H02J 7/00; H02J 50/10;** Y02E 60/10

(86) International application number:
**PCT/CN2021/079536**

(87) International publication number:
**WO 2021/185106 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **20.03.2020   CN 202010203685**

(71) Applicant: **Huawei Technologies Co., Ltd.
Shenzhen, Guangdong 518129, (CN)**

(72) Inventors:
• **LIU, Kenan
  Shenzhen, Guangdong 518129 (CN)**
• **LU, Xinxian
  Shenzhen, Guangdong 518129 (CN)**
• **MIAO, Lei
  Shenzhen, Guangdong 518129 (CN)**
• **WANG, Junjie
  Shenzhen, Guangdong 518129 (CN)**
• **LIU, Hongma
  Shenzhen, Guangdong 518129 (CN)**
• **TANG, Zhaohui
  Shenzhen, Guangdong 518129 (CN)**
• **WU, Duming
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **CHARGING MANAGEMENT AND CONTROL METHOD, AND ELECTRONIC DEVICE**

(57)    This application discloses a charging management and control method and an electronic device. The method includes: When connecting to an external power supply, the electronic device starts to obtain data such as a time at which the external power supply is connected, a battery level, and a charger type; the electronic device obtains first duration and second duration based on the data; in the first duration, the electronic device performs fast charging on the battery; and in the second duration, the electronic device performs slow charging on the battery, or suspends charging the battery. In this way, the electronic device performs management and control on a charging process of the battery when charging the battery, to reduce a time of continuing charging the battery in a fully charged state by the electronic device.

S101. An electronic device detects that an external power supply is connected, and obtains first data

S102. The electronic device obtains first duration and second duration based on the first data

S103. The electronic device charges a battery based on a first charging parameter

S104. The electronic device determines whether a time for which the electronic device charges the battery based on the first charging parameter reaches the first duration

S105. The electronic device charges the battery based on a second charging parameter

S106. The electronic device determines whether a time for which the electronic device charges the battery based on the second charging parameter reaches the second duration

S107. The electronic device continues to charge the battery based on the first charging parameter

S108. The electronic device detects that the electronic device is disconnected from the external power supply, and stops charging the battery

FIG. 3

**Description**

This application claims priority to Chinese Patent Application No. 202010203685.5, filed with the China National Intellectual Property Administration on March 20, 2020 and entitled "CHARGING MANAGEMENT AND CONTROL METHOD AND ELECTRONIC DEVICE", which is incorporated herein by reference in its entirety.

**TECHNICAL FIELD**

The present invention relates to the field of electronic technologies, and in particular, to a charging management and control method and an electronic device.

**BACKGROUND**

Currently, batteries in most electronic devices (for example, a mobile phone, a computer, a headset, and the like) are rechargeable batteries. When a user connects a battery in an electronic device to a charger for charging, the user does not remove the charger in time after the battery is fully charged. For example, when a user connects a mobile phone to a charger for charging at night, the user usually lets a battery be charged for more than 7 hours before removing the charger. However, the battery of the mobile phone can be fully charged in 1 to 3 hours. As a result, the battery of the mobile phone continues to be charged for more than 4 hours in a fully charged state. In this way, when a battery of an electronic device is in a fully charged state, continuing to charge the battery by the electronic device may cause battery capacity shrinkage, battery bulge and swelling, a shortened service life, and the like.

Therefore, how to manage and control a charging process of a battery when an electronic device charges the battery, and reduce a time for continuing to charge the battery that is in a fully charged state by the electronic device is an urgent problem that needs to be resolved currently.

**SUMMARY**

Embodiments of this application provide a charging management and control method and an electronic device. The method is used in a process in which the electronic device charges a battery, so that a time in which the electronic device continues to charge the battery in a fully charged state can be reduced.

According to a first aspect, a charging management and control method used for an electronic device is provided, and the method may include: First, the electronic device detects that an external power supply is connected. The electronic device obtains first data in response to detecting that the external power supply is connected, and the first data is used to represent a status of the electronic device when the electronic device detects that the external power supply is connected. In response to detecting that the external power supply is connected, the electronic device starts charging. The electronic device determines first duration and second duration based on the first data, the first duration is used to represent predicted charging duration for which the electronic device performs charging based on a first charging parameter, and the second duration is used to represent predicted charging duration for which the electronic device performs charging based on a second charging parameter. The electronic device performs charging based on the first charging parameter, where duration of the charging is first actual charging duration, and the first actual charging duration is used to represent actual charging duration for which the electronic device performs the charging based on the first charging parameter. The electronic device performs charging based on the second charging parameter when the first actual charging duration is equal to the first duration, where duration of the charging is second actual charging duration, and the second actual charging duration is used to represent actual charging duration for which the electronic device performs the charging based on the second charging parameter. Charging efficiency with which the electronic device performs charging based on the first charging parameter is higher than charging efficiency with which the electronic device performs charging based on the second charging parameter.

The first data includes one or more of: a time at which the external power supply is connected, a remaining battery level when the electronic device detects that the external power supply is connected, a charger type, a time zone in which the electronic device is located, screen-on/screen-off information of the electronic device, an alarm clock ringing time that is set in the electronic device, a to-do list reminder time point that is set in the electronic device, and sensor data of the electronic device.

The first charging parameter includes a first charging cut-off voltage and first charging input power. The second charging parameter includes a second charging cut-off voltage and second charging input power. The first charging cut-off voltage is larger than the second charging cut-off voltage. The first charging input power is larger than the second charging input power.

In this way, the electronic device can perform charging management and control on a charging process when charging the battery. When a user connects the electronic device to the external power supply for charging for a long time (for example, at night), the electronic device may perform fast charging on the battery, and then perform slow charging on the battery. In addition, the electronic device may determine fast charging duration and slow charging duration based on a user access scenario. In different scenarios, the electronic device performs fast charging or slow charging on the battery for different duration. When the user charges the electronic device for a long time, the electronic device may delay, by performing the charging management and control, charging of the battery to a fully charged state. In this way, a time for which the battery continues to be charged when the battery is in the fully charged state can be reduced. Therefore, a use time of the battery in the electronic device can be prolonged, and user experience is improved. With reference to the first aspect, in a possible implementation, after the electronic device performs charging based on the second charging parameter, where duration of the charging is second actual charging duration, the method further includes: The electronic device performs charging based on the first charging parameter when the second actual charging duration is equal to the second duration. If the electronic device keeps performing slow charging, when the user disconnects the external power supply from the electronic device, a battery level of the battery in the electronic device may not reach 100%. After the electronic device performs slow charging for a period of time, fast charging is performed, and the electronic device quickly charges the battery until the battery level reaches 100%. In this way, a case in which the battery level of the electronic device of the user does not reach 100% when charging ends can be reduced.

With reference to the first aspect, in a possible implementation, the first data includes a time at which the external power supply is connected, and the time at which the external power supply is connected is within a night time period. The night time period may be 23:00 p.m. to 6:00 a.m.. In this way, the electronic device performs charging management and control on the battery only in the night time period, that is, the electronic device first performs fast charging and then performs slow charging on the battery. The user is only likely to connect the electronic device to the external power supply for a long time in the night time period, and this may cause the battery in the electronic device to be charged in the fully charged state. At daytime, the user usually does not connect the electronic device to the external power supply for a long time. Therefore, the electronic device performs fast charging on the battery. In this way, a user habit can be better satisfied, thereby improving user experience.

With reference to the first aspect, in a possible implementation, the method further includes: The electronic device detects a first event. In response to detecting the first event, the electronic device stops charging based on the second charging parameter, and starts to perform charging based on a third charging parameter. Charging efficiency with which the electronic device performs charging based on the third charging parameter is higher than the charging efficiency with which the electronic device performs charging based on the second charging parameter.

The first event includes one or more of the following: a quantity of screen-on times of the electronic device is greater than a first threshold; screen-on duration of the electronic device is greater than a second threshold; a quantity of screen-off times of the electronic device is greater than a third threshold; screen-off duration of the electronic device is less than a fourth threshold; power consumption of the electronic device is greater than a fifth threshold; the electronic device starts or uses a video application; or the electronic device starts or uses a game application.

When the electronic device performs slow charging on the battery or stops charging, if the user uses the electronic device, a remaining battery level of the electronic device may be insufficient to maintain normal running of an application started by the user on the electronic device. In this case, the electronic device charges the battery based on the third charging parameter, that is, performs fast charging on the battery. In this way, the battery level of the electronic device can be sufficient to maintain normal running of the application started and used by the user. This improves user experience.

With reference to the first aspect, in a possible implementation, that the electronic device starts to perform charging based on the third charging parameter specifically includes: The electronic device performs charging based on the third charging parameter, where duration of the charging is third actual charging duration, and the third actual charging duration is used to represent actual duration for which the electronic device performs the charging based on the third charging parameter. The electronic device performs charging based on a fourth charging parameter when the third actual charging duration is equal to third duration, where duration of the charging is fourth actual charging duration. The third duration is used to represent predicted charging duration for which the electronic device performs the charging based on the third charging parameter, and the fourth actual charging duration is used to represent actual charging duration for which the electronic device performs the charging based on the fourth charging parameter. The charging efficiency with which the electronic device performs charging based on the third charging parameter is higher than charging efficiency with which the electronic device performs charging based on the fourth charging parameter. The third duration is determined by using second data, and the second data is used to represent a status of the electronic device when the first event is detected.

The second data includes one or more of: a time at which the electronic device detects the first event, a remaining battery level of the electronic device when the electronic device detects the first event, the charger type, the time zone in which the electronic device is located, screen-on/screen-off information of the electronic device, the alarm clock ringing time that is set in the electronic device, the to-do list time that is set in the electronic device, and the sensor data of the electronic device.

In this way, in a process in which the electronic device performs slow charging on the battery, if the user uses the electronic device, the electronic device performs fast charging on the battery again for a period of time, and then performs slow charging on the battery. The electronic device predicts, based on the second data obtained by the electronic device when the user uses the electronic device, duration for which the electronic device performs fast charging on the battery again and duration for which the electronic device performs slow charging on the battery. In this way, the electronic device may change battery charging efficiency of the electronic device based on a specific scenario. This can meet a requirement that a battery level of the electronic device is sufficient for the user to normally use the electronic device in a charging process of the electronic device, thereby improving user experience.

With reference to the first aspect, in a possible implementation, the method further includes: The electronic device detects a second event. In response to detecting the second event, the electronic device performs charging based on the first charging parameter, and the second event is used to represent a user-preset time recorded by the electronic device. When the remaining battery level of the electronic device reaches a first threshold through charging, the electronic device performs charging based on the second charging parameter. When a first time arrives, the electronic device performs charging based on a fifth charging parameter, and the first time is a time before the user-preset time. The second event includes one or more of: the alarm clock ringing time, a reminder time point specified in a memo, a time point specified in a schedule, and the to-do list reminder time point that are set in the electronic device.

When the user charges the electronic device, especially at night, the user sets a wake-up alarm clock of the next morning in the electronic device. In this case, the user usually gets up and removes the charger of the electronic device when the alarm clock rings. In this way, the electronic device performs charging management and control based on the alarm clock time that is set by the user, and this better conforms to a habit of the user. In addition, when the remaining battery level of the electronic device reaches a specific threshold through charging, the slow charging starts. This can reduce charging duration for which the battery is charged in the fully charged state. Fast charging is resumed a period of time before the alarm clock rings, to ensure that the electronic device is fully charged when the user removes the charger. In this way, user experience can be improved.

With reference to the first aspect, in a possible implementation, that the electronic device performs charging based on the second charging parameter specifically includes: The electronic device performs charging or stopping charging based on the second charging parameter. To be specific, when the electronic device performs charging based on the second charging parameter, the electronic device may perform slow charging on the battery, or may stop charging the battery.

With reference to the first aspect, in a possible implementation, the third charging parameter and the fifth charging parameter are the same as the first charging parameter, and the fourth charging parameter is the same as the second charging parameter.

With reference to the first aspect, in a possible implementation, a sum of the first duration and the second duration is not less than a sixth threshold. If the sum of the first duration and the second duration that are predicted by the electronic device based on the first data is too short, in other words, if total duration for which the user charges the electronic device in this scenario is not long, the electronic device does not perform the charging management and control. The electronic device keeps performing fast charging. This can avoid a case in which the battery is not fully charged when the user ends charging.

With reference to the first aspect, in a possible implementation, before the electronic device performs charging based on the first charging parameter, where duration of the charging is first actual charging duration, the method further includes: The electronic device determines that no alarm clock is set in the electronic device in a first time period after the external power supply is connected; in a time period from 23:00 p.m. to 6:00 a.m., the external power supply is in a connected state; and a sum of the first duration and the second duration is greater than 4 hours. That the electronic device performs charging based on the first charging parameter, where duration of the charging is first actual charging duration specifically includes: If the electronic device determines that an alarm clock is set in the electronic device in the first time period after the external power supply is connected, the electronic device performs charging based on the first charging parameter until the remaining battery level of the electronic device is 80%, and the electronic device stops charging. If a time at which the remaining battery level of the electronic device reaches 80% through charging is earlier than half an hour before the alarm clock ringing time arrives, the electronic device performs charging based on the first charging parameter to the alarm clock ringing time.

If the alarm clock is set in the electronic device, the electronic device performs the charging management and control on the battery charging process based on the alarm clock ringing time. That is, the electronic device first performs fast charging on the battery, and stops charging when the battery level is 80%. Half an hour before the alarm clock ringing time arrives, fast charging is performed until the alarm clock ringing time. If no alarm clock is set in the electronic device, the charging is performed in the time period from 23:00 p.m. to 6:00 a.m., and the electronic device predicts that the sum of the first duration and the second duration is greater than 4 hours, the electronic device first performs fast charging on the battery in the first duration, then performs slow charging, and stops charging in the second duration. Otherwise, the electronic device keeps performing fast charging. In this way, not only a time for charging a battery in a fully charged state can be reduced, but also a case in which the battery is not fully charged when charging ends can be reduced.

With reference to the first aspect, in a possible implementation, that the electronic device performs charging based on the second charging parameter, where duration of the charging is second actual charging duration further includes: If the second actual charging duration is less than the second duration, and a time that is of the time zone in which the electronic device is located and that is obtained by the electronic device is 6:00 a.m., the electronic device stops charging based on the second charging parameter. At 6:00 a.m., if the electronic device still performs slow charging on the battery based on prediction of the charging model, the battery may not be fully charged when the charging ends. Fast charging is resumed at 6:00 a.m., to reduce a case in which the battery is not fully charged when the user gets up and removes the charger.

With reference to the first aspect, in a possible implementation, that the electronic device determines first duration and second duration based on the first data includes: The electronic device inputs first predicted charging duration into a second charging model to obtain the first duration and the second duration, and the first predicted charging duration is determined by the electronic device based on the first data. Training data of the second charging model includes second input data and second output data.

The second input data includes second predicted charging duration, and the second predicted charging duration is determined based on first historical charging data of a first user. The first historical charging data includes one or more of: a time at which the electronic device starts to charge the battery, a battery level when the electronic device starts to charge the battery, a charger type, actual charging duration for which the electronic device charges the battery, a time zone in which the electronic device is located, average charging duration in a week, power consumption of the electronic device, sensor information, and whether a charging time is during a holiday.

The second output data includes first charging duration and second charging duration. The first charging duration is obtained by subtracting a first correction from the actual charging duration of the first user. The second charging duration is equal to the first correction. The first correction is determined based on a confidence level of a first charging model.

That the second predicted charging duration is determined based on first historical charging data of a first user specifically includes: The second predicted duration is calculated by the electronic device by inputting the first historical data into the first charging model. Training data of the first charging model includes first input data and second input data, and the first input data includes second historical charging data of a plurality of users.

The second historical charging data includes one or more of: a time at which the electronic device starts to charge the battery, a battery level when the electronic device starts to charge the battery, a charger type, actual charging duration of charging the battery by the electronic device, a time zone in which the electronic device is located, average charging duration in a week, power consumption of the electronic device, sensor information, and whether a charging time is during a holiday.

The electronic device obtains, through training based on historical charging data of a specific user, a charging model that outputs the first duration and the second duration. Duration for which the electronic device performs fast charging and slow charging on the battery by different users in a same charging scenario is different. In this way, a charging habit of each user is better satisfied, and charging management and control can be better performed on a charging process of the user.

With reference to the first aspect, in a possible implementation, the first charging model and the second charging model exist in a cloud server (for example, Huawei cloud) provided by an electronic device vendor. The user logs in to a cloud service account on the electronic device of the user, and the cloud server collects training data to train the first charging model and the second charging model. Each time the user starts charging, the electronic device sends the collected first data to the cloud server. After the first duration and the second duration are obtained by using the first charging model and the second charging model in the cloud server, the first duration and the second duration are sent to the electronic device. In this way, the electronic device does not need to store the first charging model and the second charging model, thereby saving memory space of the electronic device.

With reference to the first aspect, in a possible implementation, the first charging model and the second charging model exist in the electronic device of the user. This avoids a case in which the user performs charging when no network is connected and the first duration and the second duration of current charging that are predicted by the charging model cannot be obtained.

With reference to the first aspect, in a possible implementation, the historical charging data of the electronic device of the user further includes charging location information, for example, information about a home, an office, or an outdoor location. In different places, total duration from starting charging when the user connects the charger to the electronic device to ending charging varies. The second charging model is trained with reference to different location information, so that the first duration and the second duration that are output by the second charging model can better comply with a charging habit of the user, and charging management and control can be better performed on a charging process of the battery in the electronic device.

According to a second aspect, an electronic device is provided, including a memory, a processor, a charging management module, a power management module, and a battery. The power management module, the memory, and the processor are coupled, the charging management module, the battery, and the power management module are coupled, and the charging management module is coupled to the battery.

The processor is configured to: obtain first data, where the first data is used to represent a status when the charging management module detects that an external power supply is connected, and determine first duration and second duration based on the first data, where the first duration is used to represent predicted charging duration for which the charging management module performs charging based on a first charging parameter, and the second duration is used to represent predicted charging duration for which the charging management module performs charging based on a second charging parameter.

The power management module is configured to monitor a remaining battery level of the battery.

The charging management module is configured to: detect connecting of the external power supply; charge the battery based on the first charging parameter, where duration of the charging is first actual charging duration, and the first actual charging duration is used to represent actual charging duration for which the charging management module performs the charging based on the first charging parameter; and charge the battery based on the second charging parameter when third duration is equal to the first duration, where duration of the charging is second actual charging duration, and the second actual charging duration is used to represent actual charging duration for which the charging management module performs the charging based on the second charging parameter.

Charging efficiency with which the charging management module performs charging based on the first charging parameter is higher than charging efficiency with which the charging management module performs charging based on the second charging parameter.

The first data includes one or more of: a time at which the external power supply is connected, a remaining battery level when the electronic device detects that the external power supply is connected, a charger type, a time zone in which the electronic device is located, screen-on/screen-off information of the electronic device, an alarm clock ringing time that is set in the electronic device, a to-do list reminder time point that is set in the electronic device, and sensor data of the electronic device.

The first charging parameter includes a first charging cut-off voltage and first charging input power. The second charging parameter includes a second charging cut-off voltage and second charging input power. The first charging cut-off voltage is larger than the second charging cut-off voltage. The first charging input power is larger than the second charging input power.

In this way, the electronic device can perform charging management and control on a charging process when charging the battery. When the user connects the electronic device to the external power supply for charging for a long time (for example, at night), the electronic device may perform fast charging on the battery, and then perform slow charging on the battery. In addition, the electronic device may determine fast charging duration and slow charging duration based on a user access scenario. In different scenarios, the electronic device performs fast charging or slow charging on the battery for different duration. When the user charges the electronic device for a long time, the electronic device may delay, by performing charging management and control, charging of the battery to a fully charged state. In this way, a time for which the battery continues to be charged when the battery is in the fully charged state can be reduced. Therefore, a use time of the battery in the electronic device can be prolonged, and user experience is improved. With reference to the second aspect, in a possible implementation, after the charging management module performs charging based on the second charging parameter, where duration of the charging is the second actual charging duration, the charging management module is further configured to: when the second actual charging duration is equal to the second duration, perform charging based on the first charging parameter. If the electronic device keeps performing slow charging, when the user disconnects the external power supply from the electronic device, a battery level of the battery in the electronic device may not reach 100%. After the electronic device performs slow charging for a period of time, fast charging is performed, and the electronic device quickly charges the battery until the battery level reaches 100%. In this way, a case in which the battery level of the electronic device of the user does not reach 100% when charging ends can be reduced.

With reference to the second aspect, in a possible implementation, the first data includes a time at which the external power supply is connected, and the time at which the external power supply is connected is within a night time period. The night time period may be 23:00 p.m. to 6:00 a.m.. In this way, the electronic device performs charging management and control on the battery only in the night time period, that is, the electronic device first performs fast charging and then performs slow charging on the battery. The user is only likely to connect the electronic device to the external power supply for a long time in the night time period, and this may cause the battery in the electronic device to be charged in the fully charged state. At daytime, the user usually does not connect the electronic device to the external power supply for a long time. Therefore, the electronic device performs fast charging on the battery. In this way, a user habit can be better satisfied, thereby improving user experience.

With reference to the second aspect, in a possible implementation, the processor is further configured to detect a first event. The charging management module is specifically configured to: in response to detecting the first event, stop charging based on the second charging parameter, and start charging based on a third charging parameter. Charging efficiency with which the charging management module performs charging based on the third charging parameter is higher than the charging efficiency with which the charging management module performs charging based on the second charging parameter.

The first event includes one or more of the following: a quantity of screen-on times of the electronic device is greater than a first threshold; screen-on duration of the electronic device is greater than a second threshold; a quantity of screen-off times of the electronic device is greater than a third threshold; screen-off duration of the electronic device is less than a fourth threshold; power consumption of the electronic device is greater than a fifth threshold; the electronic device starts or uses a video application; or the electronic device starts or uses a game application.

When the electronic device performs slow charging on the battery or stops charging, if the user uses the electronic device, a remaining battery level of the electronic device may be insufficient to maintain normal running an application started by the user on the electronic device. In this case, the electronic device charges the battery based on the third charging parameter, that is, performs fast charging on the battery. In this way, the battery level of the electronic device can be sufficient to maintain normal running of the application started and used by the user. This improves user experience.

With reference to the second aspect, in a possible implementation, charging starts to be performed based on the third charging parameter. The charging management module is specifically configured to: perform charging based on the third charging parameter, where duration of the charging is third actual charging duration, and the third actual charging duration is used to represent an actual time for the charging management module to perform the charging based on the third charging parameter. When the third actual charging duration is equal to the third duration, the charging management module performs charging based on a fourth charging parameter, where duration of the charging is fourth actual charging duration. The third duration is used to represent predicted charging duration for which the charging management module performs the charging based on the third charging parameter, and the fourth actual charging duration is used to represent actual charging duration for which the charging management module performs the charging based on the fourth charging parameter. The charging efficiency with which the charging management module performs charging based on the third charging parameter is higher than charging efficiency with which the charging management module performs charging based on the fourth charging parameter. The third duration is determined by using second data, and the second data is used to represent a status when the processor detects the first event.

The second data includes one or more of: a time at which the processor detects the first event, a remaining battery level when the processor detects the first event, the charger type, the time zone in which the electronic device is located, the screen-on/screen-off information of the electronic device, the alarm clock ringing time that is set in the electronic device, the to-do list reminder time point that is set in the electronic device, and the sensor data of the electronic device. In this way, in a process in which the electronic device performs slow charging on the battery, if the user uses the electronic device, the electronic device performs fast charging on the battery again for a period of time, and then performs slow charging on the battery. The electronic device predicts, based on the second data obtained by the electronic device when the user uses the electronic device, duration for which the electronic device performs fast charging on the battery again and duration for which the electronic device performs slow charging on the battery. In this way, the electronic device may change battery charging efficiency of the electronic device based on a specific scenario. This can meet a requirement that a battery level of the electronic device is sufficient for the user to normally use the electronic device in a charging process of the electronic device, thereby improving user experience.

With reference to the second aspect, in a possible implementation, the processor is further configured to detect a second event. The charging management module is specifically configured to: in response to detecting the second event, perform charging based on the first charging parameter, where the second event is used to represent a user-preset time recorded by the memory; when a remaining battery level of the battery reaches a first threshold through charging, perform charging based on the second charging parameter; and when a first time arrives, perform charging based on a fifth charging parameter, where the first time is a time before the user-preset time.

The second event includes one or more of: the alarm clock ringing time, a reminder time point specified in a memo, a time point specified in a schedule, and the to-do list reminder time point that are set in the electronic device.

When the user charges the electronic device, especially at night, the user sets a wake-up alarm clock of the next morning in the electronic device. In this case, the user usually gets up and removes the charger of the electronic device when the alarm clock rings. In this way, the electronic device performs charging management and control based on the alarm clock time that is set by the user, and this better conforms to a habit of the user. In addition, when the remaining battery level of the electronic device reaches a specific threshold through charging, slow charging starts. This can reduce charging duration for which the battery is in the fully charged state. Fast charging is resumed a period of time before the alarm clock rings, to ensure that the electronic device is fully charged when the user removes the charger. In this way, user experience can be improved.

With reference to the second aspect, in a possible implementation, the charging management module is specifically configured to perform charging based on the second charging parameter or stop charging. To be specific, when the electronic device performs charging based on the second charging parameter, the electronic device may perform slow charging on the battery, or may stop charging the battery.

With reference to the second aspect, in a possible implementation, the third charging parameter and the fifth charging parameter are the same as the first charging parameter, and the fourth charging parameter is the same as the second charging parameter.

With reference to the second aspect, in a possible implementation, a sum of the first duration and the second duration is not less than a sixth threshold. If the sum of the first duration and the second duration that are predicted by the electronic device based on the first data is too short, in other words, if total duration for which the user charges the electronic device in this scenario is not long, the electronic device does not perform charging management and control. The electronic device keeps performing fast charging. This can avoid a case in which the battery is not fully charged when the user ends charging.

With reference to the second aspect, in a possible implementation, the processor is further configured to: determine that no alarm clock is set in the electronic device in a first time period after the external power supply is connected, that the external power supply is in a connected state in the time period from 23:00 p.m. to 6:00 a.m., and that the sum of the first duration and the second duration is greater than 4 hours. In a case in which the processor determines that an alarm clock is set in the electronic device in the first time period after the external power supply is connected, the charging management module is configured to: perform charging based on the first charging parameter until the remaining battery level of the electronic device is 80%; stop charging; and if a time at which the remaining battery level of the battery reaches 80% through charging is earlier than half an hour before the alarm clock ringing time arrives, perform charging based on the first charging parameter half an hour before the alarm clock ringing time arrives until the alarm clock ringing time.

If the alarm clock is set in the electronic device, the electronic device performs charging management and control on the battery charging process based on the alarm clock ringing time. That is, the electronic device first performs fast charging on the battery, and stops charging when the battery level is 80%. Half an hour before the alarm clock ringing time arrives, fast charging is performed until the alarm clock ringing time. If no alarm clock is set in the electronic device, the charging is performed in the time period from 23:00 p.m. to 6:00 a.m., and the electronic device predicts that the sum of the first duration and the second duration is greater than 4 hours, the electronic device first performs fast charging on the battery in the first duration, then performs slow charging, and stops charging in the second duration. Otherwise, the electronic device keeps performing fast charging. In this way, not only a time for charging a battery in a fully charged state can be reduced, but also a case in which the battery is not fully charged when charging ends can be reduced.

With reference to the second aspect, in a possible implementation, charging is performed based on the second charging parameter, where duration of the charging is second actual charging duration. The charging module is further configured to: if the second actual charging duration is less than the second duration, and an obtained time of the time zone in which the electronic device is located is 6:00 a.m., the electronic device stops charging based on the second charging parameter. At 6:00 a.m., if the electronic device still performs slow charging on the battery based on prediction of the charging model, the battery may not be fully charged when the charging ends. Fast charging is resumed at 6:00 a.m., to reduce a case in which the battery is not fully charged when the user gets up and removes the charger.

With reference to the second aspect, in a possible implementation, the processor is specifically configured to: input first predicted charging duration into a second charging model, to obtain the first duration and the second duration. The first predicted charging duration is determined by the electronic device based on the first data, and training data of the second charging model includes second input data and second output data.

The second input data includes second predicted charging duration, and the second predicted charging duration is determined based on first historical charging data of a first user. The first historical charging data includes one or more of: a time at which the electronic device starts to charge the battery, a battery level when the electronic device starts to charge the battery, a charger type, actual charging duration for which the electronic device charges the battery, a time zone in which the electronic device is located, average charging duration in a week, power consumption of the electronic device, sensor information, and whether a charging time is during a holiday.

The second output data includes first charging duration and second charging duration. The first charging duration is obtained by subtracting a first correction from the actual charging duration of the first user. The second charging duration is equal to the first correction. The first correction is determined based on a confidence level of a first charging model.

That the second predicted charging duration is determined based on first historical charging data of a first user specifically includes: The second predicted duration is calculated by inputting the first historical data by the electronic device into the first charging model. Training data of the first charging model includes first input data and the second input data, and the first input data includes second historical charging data of a plurality of users.

The second historical charging data includes one or more of: a time at which the electronic device starts to charge the battery, a battery level when the electronic device starts to charge the battery, a charger type, actual charging duration of charging the battery by the electronic device, a time zone in which the electronic device is located, average charging duration in a week, power consumption of the electronic device, sensor information, and whether the charging time is during a holiday.

The electronic device obtains, through training based on historical charging data of a specific user, a charging model that outputs the first duration and the second duration. Duration for which the electronic device performs fast charging and slow charging on the battery by different users in a same charging scenario is different. In this way, a charging habit of each user is better satisfied, and charging management and control can be better performed on a charging process of the user.

With reference to the second aspect, in a possible implementation, the first charging model and the second charging model exist in a cloud server (for example, Huawei cloud) provided by an electronic device vendor. The user logs in to a cloud service account on the electronic device of the user, and the cloud server collects training data to train the first charging model and the second charging model. Each time the user starts charging, the electronic device sends the collected first data to the cloud server. After the first duration and the second duration are obtained by using the first charging model and the second charging model in the cloud server, the first duration and the second duration are sent to the electronic device. In this way, the electronic device does not need to store the first charging model and the second charging model, thereby saving memory space of the electronic device.

With reference to the second aspect, in a possible implementation, the first charging model and the second charging model exist in the electronic device of the user. This avoids a case in which the user performs charging when no network is connected and the first duration and the second duration of current charging that are predicted by the charging model cannot be obtained.

With reference to the second aspect, in a possible implementation, the historical charging data of the electronic device of the user further includes charging location information, for example, information about a home, an office, or an outdoor location. In different places, total duration from starting charging when the user connects the charger to the electronic device to ending charging varies. The second charging model is trained with reference to different location information, so that the first duration and the second duration that are output by the second charging model can better comply with a charging habit of the user, and charging management and control can be better performed on a charging process of the battery in the electronic device.

According to a third aspect, an electronic device is provided, including one or more touchscreens, one or more storage modules, and one or more processing modules, where the one or more storage modules store one or more programs. When the one or more processing modules execute the one or more programs, the electronic device is enabled to implement the method according to any one of the possible implementations of the first aspect.

According to a fourth aspect, an electronic device is provided, including a memory and a processor. The memory is coupled to the processor, the memory is configured to store computer program code, and the computer program code includes computer instructions. The processor is configured to: detect access of an external power supply; obtain first data in response to detecting that the external power supply is connected, where the first data is used to represent a status when the processor detects that the external power supply is connected; start charging in response to detecting that the external power supply is connected; determine first duration and second duration based on the first data, where the first duration is used to represent predicted charging duration for which the processor performs charging based on a first charging parameter, and the second duration is used to represent predicted charging duration for which the processor performs charging based on a second charging parameter; perform charging based on the first charging parameter, where duration of the charging is first actual charging duration, and the first actual charging duration is used to represent actual charging duration for which the processor performs the charging based on the first charging parameter; and perform charging based on the second charging parameter when the first actual charging duration is equal to the first duration, where duration of the charging is second actual charging duration, and the second actual charging duration is used to represent actual charging duration for which the processor performs the charging based on the second charging parameter. Charging efficiency with which the processor performs charging based on the first charging parameter is higher than charging efficiency with which the processor performs charging based on the second charging parameter.

The first data includes one or more of: a time at which the external power supply is connected, a remaining battery level when the processor detects that the external power supply is connected, a charger type, a time zone in which the electronic device is located, screen-on/screen-off information of the electronic device, an alarm clock ringing time that is set in the electronic device, a to-do list reminder time point that is set in the electronic device, and sensor data of the electronic device.

The first charging parameter includes a first charging cut-off voltage and first charging input power. The second charging parameter includes a second charging cut-off voltage and second charging input power. The first charging cut-off voltage is larger than the second charging cut-off voltage. The first charging input power is larger than the second charging input power.

In this way, the electronic device can perform charging management and control on a charging process when charging the battery. When a user connects the electronic device to the external power supply for charging for a long time (for example, at night), the electronic device may perform fast charging on the battery, and then perform slow charging on the battery. In addition, the electronic device may determine fast charging duration and slow charging duration based on a user access scenario. In different scenarios, the electronic device performs fast charging or slow charging on the battery for different duration. When the user charges the electronic device for a long time, the electronic device may delay, by performing charging management and control, charging of the battery to a fully charged state. In this way, a time for which the battery continues to be charged when the battery is in the fully charged state can be reduced. Therefore, a use time of the battery in the electronic device can be prolonged, and user experience is improved. With reference to the fourth aspect, in a possible implementation, the first data includes the time at which the external power supply is connected, and the time at which the external power supply is connected is within a night time period. The night time period may be 23:00 p.m. to 6:00 a.m.. In this way, the electronic device performs charging management and control on the battery only in the night time period, that is, the electronic device first performs fast charging and then performs slow charging on the battery. The user is only likely to connect the electronic device to the external power supply for a long time in the night time period, and this may cause the battery in the electronic device to be charged in the fully charged state. At daytime, the user usually does not connect the electronic device to the external power supply for a long time. Therefore, the electronic device performs fast charging on the battery. In this way, a user habit can be better satisfied, thereby improving user experience.

With reference to the fourth aspect, in a possible implementation, the processor is further configured to: detect a first event; and in response to detecting the first event, stop charging based on the second charging parameter, and start charging based on a third charging parameter. Charging efficiency with which the charging management module performs charging based on the third charging parameter is higher than the charging efficiency with which the charging management module performs charging based on the second charging parameter.

The first event includes one or more of the following: a quantity of screen-on times of the electronic device is greater than a first threshold; screen-on duration of the electronic device is greater than a second threshold; a quantity of screen-off times of the electronic device is greater than a third threshold; screen-off duration of the electronic device is less than a fourth threshold; power consumption of the electronic device is greater than a fifth threshold; the electronic device starts or uses a video application; or the electronic device starts or uses a game application.

When the electronic device performs slow charging on the battery or stops charging, if the user uses the electronic device, a remaining battery level of the electronic device may be insufficient to maintain normal running of an application started by the user on the electronic device. In this case, the electronic device charges the battery based on the third charging parameter, that is, performs fast charging on the battery. In this way, the battery level of the electronic device can be sufficient to maintain normal running of the application started and used by the user. This improves user experience.

With reference to the fourth aspect, in a possible implementation, the processor starts to perform charging based on the third charging parameter, and the processor is specifically configured to: perform charging based on the third charging parameter, where duration of the charging is third actual charging duration, and the third actual charging duration is used to represent actual duration for which the processor performs the charging based on the third charging parameter. The processor performs charging based on a fourth charging parameter when the third actual charging duration is equal to third duration, where duration of the charging is fourth actual charging duration. The third duration is used to represent predicted charging duration for which the processor performs the charging based on the third charging parameter, and the fourth actual charging duration is used to represent actual charging duration for which the processor performs the charging based on the fourth charging parameter. The charging efficiency with which the processor performs charging based on the third charging parameter is higher than charging efficiency with which the processor performs charging based on the fourth charging parameter. The third duration is determined by using second data, and the second data is used to represent a status of the electronic device when the first event is detected.

The second data includes one or more of: a time at which the processor detects the first event, a remaining battery level when the processor detects the first event, the charger type, the time zone in which the electronic device is located, the screen-on/screen-off information of the electronic device, the alarm clock ringing time that is set in the electronic device, the to-do list reminder time that is set in the electronic device, and the sensor data of the electronic device.

In this way, in a process in which the electronic device performs slow charging on the battery, if the user uses the electronic device, the electronic device performs fast charging on the battery again for a period of time, and then performs slow charging on the battery. The electronic device predicts, based on the second data obtained by the electronic device when the user uses the electronic device, duration for which the electronic device performs fast charging on the battery again and duration for which the electronic device performs slow charging on the battery. In this way, the electronic device may change battery charging efficiency of the electronic device based on a specific scenario. This can meet a requirement that a battery level of the electronic device is sufficient for the user to normally use the electronic device in a charging process of the electronic device, thereby improving user experience.

With reference to the fourth aspect, in a possible implementation, the processor is further configured to: detect a second event, and in response to detecting the second event, perform charging based on the first charging parameter, where the second event is used to represent a user-preset time recorded by the memory; when a remaining battery level of the battery reaches a first threshold through charging, charge the battery based on the second charging parameter; and when a first time arrives, perform charging based on a fifth charging parameter, where the first time is a time before the user-preset time.

The second event includes one or more of: the alarm clock ringing time, a reminder time point specified in a memo, a time point specified in a schedule, and the to-do list reminder time point that are set in the electronic device.

When the user charges the electronic device, especially at night, the user sets a wake-up alarm clock of the next morning in the electronic device. In this case, the user usually gets up and removes the charger of the electronic device when the alarm clock rings. In this way, the electronic device performs charging management and control based on the alarm clock time that is set by the user, and this better conforms to a habit of the user. In addition, when the remaining battery level of the electronic device reaches a specific threshold through charging, slow charging starts. This can reduce charging duration when the battery is in the fully charged state. Fast charging is resumed a period of time before the alarm clock rings, to ensure that the electronic device is fully charged when the user removes the charger. In this way, user experience can be improved.

With reference to the fourth aspect, in a possible implementation, the processor is specifically configured to perform charging based on the second charging parameter or stop charging. To be specific, when the electronic device performs charging based on the second charging parameter, the electronic device may perform slow charging on the battery, or may stop charging the battery.

With reference to the fourth aspect, in a possible implementation, the third charging parameter and the fifth charging parameter are the same as the first charging parameter, and the fourth charging parameter is the same as the second charging parameter.

With reference to the fourth aspect, in a possible implementation, a sum of the first duration and the second duration is not less than a sixth threshold. If the sum of the first duration and the second duration that are predicted by the electronic device based on the first data is too short, in other words, if total duration for which the user charges the electronic device in this scenario is not long, the electronic device does not perform charging management and control. The electronic device keeps performing fast charging. This can avoid a case in which the battery is not fully charged when the user ends charging.

With reference to the fourth aspect, in a possible implementation, the processor is further configured to: determine that no alarm clock is set in the electronic device in a first time period after the external power supply is connected, that the external power supply is in a connected state in a time period from 23:00 to 6:00, and that the sum of the first duration and the second duration is greater than 4 hours. In a case in which the processor determines that an alarm clock is set in the electronic device in the first time period after the external power supply is connected, the processor is configured to: perform charging based on the first charging parameter until a remaining battery level of the electronic device is 80%; stop charging; and if a time at which the remaining battery level of the battery reaches 80% through charging is earlier than half an hour before an alarm clock ringing time arrives, perform charging based on the first charging parameter half an hour before the alarm clock ringing time arrives, until the alarm clock ringing time.

If the alarm clock is set in the electronic device, the electronic device performs charging management and control on the battery charging process based on the alarm clock ringing time. That is, the electronic device first performs fast charging on the battery, and stops charging when the battery level is 80%. Half an hour before the alarm clock ringing time arrives, fast charging is performed until the alarm clock ringing time. If no alarm clock is set in the electronic device, the electronic device is charged in the time period from 23:00 p.m. to 6:00 a.m., and the electronic device predicts that the sum of the first duration and the second duration is greater than 4 hours, the electronic device first performs fast charging on the battery in the first duration, then performs slow charging and stops charging in the second duration. Otherwise, the electronic device keeps performing fast charging. In this way, not only a time for charging a battery in a fully charged state can be reduced, but also a case in which the battery is not fully charged when charging ends can be reduced.

With reference to the fourth aspect, in a possible implementation, charging is performed based on the second charging parameter, where duration of the charging is second actual charging duration. The processor is further configured to: if the second actual charging duration is less than the second duration, and an obtained time of the time zone in which the electronic device is located is 6:00 a.m., stop charging based on the second charging parameter. At 6:00 a.m., if the electronic device still performs slow charging on the battery based on prediction of the charging model, the battery may not be fully charged when the charging ends. Fast charging is resumed at 6:00 a.m., so that a case in which the battery is not fully charged when the user gets up and removes the charger can be reduced.

With reference to the fourth aspect, in a possible implementation, the processor is specifically configured to: input first predicted charging duration into a second charging model, to obtain the first duration and the second duration, where the first predicted charging duration is determined by the electronic device based on the first data. Training data of the second charging model includes second input data and second output data.

The second input data includes second predicted charging duration, and the second predicted charging duration is determined based on first historical charging data of a first user. The first historical charging data includes one or more of: a time at which the electronic device starts to charge the battery, a battery level when the electronic device starts to charge the battery, a charger type, actual charging duration for which the electronic device charges the battery, a time zone in which the electronic device is located, average charging duration in a week, power consumption of the electronic device, sensor information, and whether a charging time is during a holiday.

The second output data includes first charging duration and second charging duration. The first charging duration is obtained by subtracting a first correction from the actual charging duration of the first user. The second charging duration is equal to the first correction. The first correction is determined based on a confidence level of a first charging model.

That the second predicted charging duration is determined based on first historical charging data of a first user specifically includes: The second predicted duration is calculated by inputting the first historical data by the electronic device into the first charging model. Training data of the first charging model includes first input data and the second input data, and the first input data includes second historical charging data of a plurality of users.

The second historical charging data includes one or more of: a time at which the electronic device starts to charge the battery, a battery level when the electronic device starts to charge the battery, a charger type, actual charging duration of charging the battery by the electronic device, a time zone in which the electronic device is located, average charging duration in a week, power consumption of the electronic device, sensor information, and whether a charging time is during a holiday.

The electronic device obtains, through training and based on historical charging data of a specific user, a charging model that outputs the first duration and the second duration. Duration for which the electronic device performs fast charging and slow charging on the battery by different users in a same charging scenario is different. In this way, a charging habit of each user is better satisfied, and charging management and control can be better performed on a charging process of the user.

With reference to the fourth aspect, in a possible implementation, the first charging model and the second charging model exist in a cloud server (for example, Huawei cloud) provided by an electronic device vendor. The user logs in to a cloud service account on the electronic device of the user, and the cloud server collects training data to train the first charging model and the second charging model. Each time the user starts charging, the electronic device sends the collected first data to the cloud server. After the first duration and the second duration are obtained by using the first charging model and the second charging model in the cloud server, the first duration and the second duration are sent to the electronic device. In this way, the electronic device does not need to store the first charging model and the second charging model, thereby saving memory space of the electronic device.

With reference to the fourth aspect, in a possible implementation, the first charging model and the second charging model exist in the electronic device of the user. This avoids a case in which the user performs charging when no network is connected and the first duration and the second duration of current charging that are predicted by the charging model cannot be obtained.

With reference to the fourth aspect, in a possible implementation, the historical charging data of the electronic device of the user further includes charging location information, for example, such as charging at home, in an office, or outdoors. In different places, total duration from starting charging when the user connects the charger to the electronic device to ending charging varies. The second charging model is trained with reference to different location information, so that the first duration and the second duration that are output by the second charging model can better comply with a charging habit of the user, and charging management and control can be better performed on a charging process of the battery in the electronic device.

According to a fifth aspect, an electronic device is provided, including one or more touchscreens, one or more memories, and one or more processors. The one or more memories store one or more programs. When the one or more processors execute the one or more programs, the electronic device is enabled to implement the method according to any one of the possible implementations of the first aspect.

According to a sixth aspect, a computer-readable storage medium is provided, including instructions. When the instructions are run on an electronic device, the electronic device is enabled to perform any one of the possible implementations of the first aspect.

According to a seventh aspect, a computer product is provided. When the computer program product runs on a computer, the computer is enabled to perform any one of the possible implementations of the first aspect.

**BRIEF DESCRIPTION OF DRAWINGS**

To describe technical solutions in embodiments of this application more clearly, the following describes the accompanying drawings used in embodiments of this application.

FIG. 1 is a schematic diagram of time nodes in charging management and control according to the conventional technology;

FIG. 2 is a schematic diagram of a hardware structure of an electronic device according to an embodiment of this application;

FIG. 3 is a schematic flowchart of a charging management and control method according to an embodiment of this application;

FIG. 4 is a schematic diagram of a user interface for charging a battery by an electronic device of a user A according to an embodiment of this application;

FIG. 5A to FIG. 5F are schematic diagrams of user interfaces for charging a battery by an electronic device of a user A according to an embodiment of this application;

FIG. 6A to FIG. 6E-2 are schematic diagrams of user interfaces for charging a battery by an electronic device of a user B according to an embodiment of this application; and

FIG. 7A and FIG. 7B are a schematic diagram of user interfaces for charging a battery by an electronic device according to an embodiment of this application.

**DESCRIPTION OF EMBODIMENTS**

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of' means two or more.

The following terms "first" and "second" are merely intended for a purpose of description, and shall not be understood as an implication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of' means two or more than two. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "exemplary" or "example" or the like is intended to present a relative concept in a specific manner.

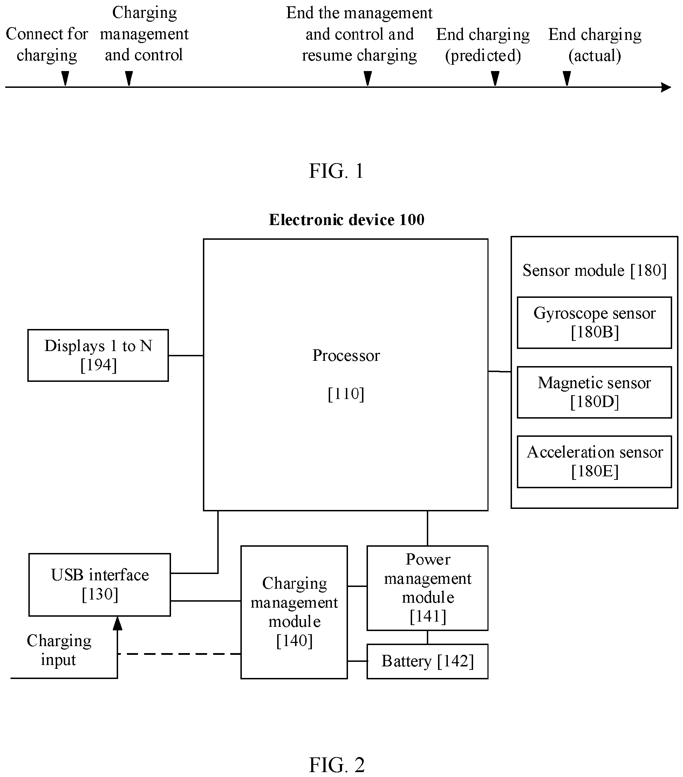

To solve a problem that a battery in an electronic device continues to be charged in a fully charged state, a method is provided in the conventional technology. The method is specifically as follows: A manufacturer of the electronic device trains a charging model based on historical charging data (for example, a charging start time, a charging end time, and charging duration) of a plurality of users. Training data of the charging model includes input data and corresponding output data. The input data includes a charging start time and a remaining battery level when the electronic device detects that an external power supply is connected. The output data includes total charging duration and a battery level when the charging ends. The charging model may be stored in the electronic device. After the electronic device inputs, to the charging model, a time at which the electronic device detects that an external power supply is connected and a remaining battery level when the electronic device detects that the external power supply is connected, the charging model may output predicted charging duration of a current charging process and a battery level threshold A. When a battery level reaches the threshold A, the electronic device suspends charging the battery. As shown in FIG. 1, when the electronic device starts to connect to a charger, the electronic device inputs, into the charging model, the time at which the electronic device detects that the external power supply is connected and the remaining battery level when the electronic device detects that the external power supply is connected, to obtain the predicted charging duration of current charging on the battery performed by the electronic device and the battery level threshold A. The electronic device charges the battery. If the electronic device detects that the battery level is greater than the threshold A (for example, A=80%), the electronic device suspends charging the battery. When a current time approaches a charging end time (that is, a predicted charging end time) of the current charging, the electronic device continues to charge the battery. When detecting that the electronic device is disconnected from the charger, the electronic device stops charging the battery.

The fully charged state may mean that the battery level reaches a battery capacity. In an ideal state, when the battery is in the fully charged state, the battery level may reach a rated battery capacity (that is, a battery capacity specified during design and production). Generally, the battery level is slightly less than the battery capacity when the battery is in the fully charged state. Especially for a battery that has been used for a long time, because of battery loss, when the battery is in the fully charged state, a battery level of the battery obviously cannot reach a battery capacity. In other words, an actual capacity of the battery changes due to battery loss in a using process.

According to the method provided in the conventional technology, charging management and control can be performed in a charging process, to reduce duration for which a battery is in a fully charged state, thereby reducing a case in which the battery continues to be charged in the fully charged state. However, a charging habit of a specific user is not considered in determining, by using a fixed threshold A, whether to enable charging management and control. It can be learned from FIG. 1 that if the battery charging ends at the predicted charging end time, the battery is actually not fully charged. The battery can be fully charged only at an actual charging end time. If the user continues to use the electronic device when the battery charging ends, but the battery of the electronic device is not fully charged, an insufficient battery level occurs too quickly in a process of using the electronic device by the user. Consequently, user experience is undermined.

Each user has a different charging habit of charging an electronic device. If a uniform threshold is set in electronic devices of all users to perform charging management and control, charging management and control cannot be better performed on the electronic devices of all users. In a charging process of the electronic device, to better perform charging management and control on the electronic device of each user, and to reduce a battery loss caused when a battery in the electronic device of the user continues to be charged in a fully charged state,

an embodiment of this application provides a charging management and control method. The method specifically includes: First, when detecting that an external power supply is connected, an electronic device may obtain first data (for example, a time at which the electronic device detects that the external power supply is connected, a remaining battery level of the electronic device when the electronic device detects that the external power supply is connected, a charger type, and a time zone in which the electronic device is located). The first data is used to describe a charging scenario when the electronic device detects that the external power supply is connected. The electronic device obtains first duration and second duration based on the first data. A start time of the second duration is later than or equal to an end time of the first duration. The electronic device charges a battery based on a first charging parameter in the first duration, and the electronic device charges the battery based on a second charging parameter in the second duration. Charging efficiency of the first charging parameter is higher than charging efficiency of the second charging parameter. If the battery is not fully charged within the second duration, the electronic device may continue to charge the battery based on the first charging parameter. When the electronic device detects that a connection to the external power supply is disconnected, the electronic device stops charging the battery. Charging may not be performed in the second duration. In other words, the charging efficiency of the second charging parameter is zero.

The electronic device may have a first charging model and a second charging model. The electronic device may input the first data into the first charging model to obtain first predicted duration. Then, the electronic device inputs the first predicted duration into the second charging model to obtain the first duration and the second duration. The first charging model is obtained by training historical charging data of a plurality of users. During the training, input data of the first charging model is a charging start time, a battery level when charging starts, a charger type, and a time zone in which an electronic device is located, and output of the first charging model is actual charging duration. Input of training data of the second charging model is predicted charging duration obtained by inputting historical charging data of a specific user into the first charging model. Output of the training data of the second charging model is first charging duration and second charging duration. An initial value of the first charging duration is equal to the actual charging duration. An initial value of the second charging duration is equal to 0. The first duration output by the second charging model obtained through training in this way is infinitely close to the actual charging duration, and the second duration is infinitely close to 0. When the user enables the electronic device to charge the battery for a long time, a value of the second duration is supposed to be larger. In this way, charging duration of a battery in a fully charged state may be shorter. However, if the second duration is excessively long, the battery is not fully charged when the charging ends. To ensure that the electronic device charges the battery in the fully charged state for a shorter time, and ensure that the battery is fully charged when the charging ends, in this application, the first charging duration and the second charging duration in the training data are corrected by using a first correction. The first charging duration is obtained by subtracting the first correction from actual charging duration of a specific user, and the second charging duration is equal to the first correction. The first correction is determined based on a confidence level of the first charging model.

It may be understood that the time obtained by the electronic device when the external power supply is connected is a time of the time zone in which the electronic device is located. For example, when a user goes from Beijing to

Mexico, the electronic device may display both Beijing time and Mexican time. When the user charges the electronic device in Mexico, the time obtained by the electronic device when the external power supply is connected is local time of Mexico.

The following explains concepts (such as charging management and control, the predicted charging duration, the first duration, the second duration, the charging parameter, the actual charging duration, a false positive rate, a yield, and the confidence level) used in embodiments of this application.

(1) Charging management and control

Changing charging efficiency in a process in which an electronic device charges a battery is referred to as charging management and control. For example, in the process in which the electronic device charges the battery, fast charging may be first performed, and then slow charging is performed. This is charging management and control. The electronic device may change the charging efficiency by adjusting a charging cut-off voltage, charging input power, or the like. It may be understood that the charging input power is determined by a charging input current and a charging input voltage.

(2) Actual charging duration

The actual charging duration refers to total duration from a time when a user inserts a charger into the electronic device and starts to charge the electronic device to a time when the user removes the charger and the electronic device stops charging, that is, total duration from a time when the electronic device detects that the electronic device is connected to the charger and starts charging to a time when the electronic device detects that the electronic device is disconnected from the charger and stops charging.

(3) Predicted charging duration

The predicted charging duration refers to total duration that is predicted by the electronic device based on data such as a battery level, a charging start time, a charger type, a quantity of battery cycles, an actual battery capacity, and a battery health status that are obtained during current charging, and that is from a time when the user inserts the charger into the electronic device to start charging to a time when the user removes the charger and the electronic device stops charging. The electronic device may predict first duration and second duration of current charging based on the predicted charging duration. A specific prediction process of predicting the charging duration is described below, and details are not described herein again.

(4) First duration

The first duration is duration that is predicted by the electronic device and for which the electronic device charges the battery based on a first charging parameter. The first duration may be obtained by the electronic device through prediction based on a battery level when the electronic device detects that the electronic device is connected to a charger, a time when the electronic device detects that the electronic device is connected to the charger, a charger type, and predicted charging duration. It may be understood that the battery is not fully charged by the electronic device within the first duration.

(5) Second duration

The second duration is duration that is predicted by the electronic device and for which the electronic device charges the battery based on a second charging parameter. The second duration in a current charging process may be obtained by the electronic device through prediction based on the battery level, the charging start time, the charger type, and the predicted charging duration that are obtained during the current charging.

(6) Charging parameter

The charging parameter in embodiments of this application include a charging cut-off voltage, a charging input voltage, a charging input current, and the like. In embodiments of this application, in one charging process, a first charging parameter, a second charging parameter, a third charging parameter, and a fourth charging parameter may be constant, or may be of a plurality of sets, or may be variable.

(7) False alarm rate

In embodiments of this application, in each training process of the first charging model, one false alarm is recorded if the predicted charging duration output by the first charging model is greater than the actual charging duration. The false alarm rate is a total quantity of false alarms divided by a total quantity of training times. It may be understood that in a case in which the predicted charging duration is greater than the actual charging duration, when the user removes the charger, the electronic device may be charging the battery based on the first charging parameter or the second charging parameter, and the battery is not fully charged. Therefore, the electronic device records that the predicted charging duration is greater than the actual charging duration as a false alarm.

(8) Yield

When the predicted charging duration is greater than the actual charging duration, the battery is not charged in the fully charged state, and the yield p is considered to be 100%. The yield is related to the predicted charging duration. When the predicted charging duration is equal to or greater than the actual charging duration, the yield is equal to 100%. When the predicted charging duration is less than the actual charging duration, the battery is fully charged by the electronic device before the user removes the charger, and this is not a false alarm. However, the electronic device may have charged the battery in the fully charged state for a period of time. In this case, the yield is not 100%. When the predicted charging duration is less than the actual charging duration, if the predicted charging duration is closer to the actual charging duration, the yield is higher. For example, if the user charges the electronic device from 10:00 p.m. to 8:00 a.m., and the first charging model predicts that the charging ends at 7:00 a.m., the yield in this case is 90%. If the first charging model predicts that the charging ends at 6:00 a.m., the yield is 80%. It may be understood that the yield being 90% and 80% are merely examples for describing a relationship between the yield and the predicted charging duration, and how to specifically calculate the yield is not limited.

(9) Confidence level

The confidence level of the first charging model represents a level of trustworthiness of the model. Herein, both of two points as follows need to be ensured: the battery is fully charged when the user removes the charger, and a time for charging the battery in the fully charged state is as short as possible. When there being no false alarm is ensured, a higher yield indicates a higher confidence level. A trade-off between the yield and the false alarm rate is related to a personal habit of the user. For example, assuming that the user removes the charger before the battery is fully charged each time the user performs charging, the yield may be mainly ensured. Specific values of the yield and the false alarm rate are not limited herein. The confidence level C of the first charging model is related to the yield and the false alarm rate. It may be understood that a confidence level of the second charging model also represents a degree of trustworthiness of the second charging model. A higher confidence level of the second charging model indicates that the charging management and control of the electronic device more conforms to a user habit. Because the confidence level of the second charging model does not need to be used in subsequent calculation in embodiments of this application, the confidence level of the second charging model is not described in detail herein.

An example of an electronic device 100 provided in the following embodiment of this application is first described. FIG. 2 is a schematic diagram of a structure of the electronic device 100.

The following uses the electronic device 100 as an example to specifically describe this embodiment. It should be understood that the electronic device 100 may have more or fewer components than those shown in the figure, or may combine two or more components, or may have different component configurations. Components shown in the figure may be implemented by hardware including one or more signal processing and/or application-specific integrated circuits, software, or a combination of hardware and software.

The electronic device 100 may include a processor 110, an internal memory 121, a universal serial bus (universal serial bus, USB) interface 130, a charging management module 140, a power management module 141, a battery 142, a sensor module 180, a display 194, and the like. The sensor module 180 may include a gyroscope sensor 180B, a magnetic sensor 180D, an acceleration sensor 180E, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In embodiments of this application, the processor may learn and train a charging model based on historical charging data of the electronic device of a user. A charging start time, a battery level when charging starts, and a charger type are input into the charging model. The charging model may predict first duration and second duration for which the electronic device charges the battery in each charging process.

The USB interface 130 is an interface that conforms to a USB standard specification, and may be specifically a mini USB interface, a micro USB interface, a USB type-C interface, or the like. The USB interface 130 may be configured to connect to a charger for charging the electronic device 100, may be configured to transmit data between the electronic device 100 and a peripheral device, or may be configured to connect to a headset for playing audio by using a headset. The interface may be further configured to connect to another electronic device such as an AR device.

It may be understood that an interface connection relationship between the modules shown in this embodiment of the present invention is merely used as an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from the charger. The charger may be a wireless charger or a wired charger. In some embodiments of wired charging, the charging management module 140 may receive charging input of the wired charger by using the USB interface 130. In some embodiments of wireless charging, the charging management module 140 may receive wireless charging input by using a wireless charging coil of the electronic device 100. The charging management module 140 may further supply power to the electronic device by using the power management module 141 when charging the battery 142.

The power management module 141 is configured to connect to the battery 142, the charging management module 140, and the processor 110. The power management module 141 receives input of the battery 142 and/or the charging management module 140, and supplies power to the processor 110, the internal memory 121, and the display 194. The power management module 141 may be further configured to monitor a parameter such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device. The electronic device 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1. In embodiments of this application, the electronic device may determine, based on screen-on duration and a quantity of screen-on times that are of the display, whether a user uses the electronic device in a charging process.

The internal memory 121 may be configured to store computer-executable program code. The executable program code includes instructions. The processor 110 runs the instructions stored in the internal memory 121, to implement various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and a phone book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when a shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The magnetic sensor 180D includes a Hall sensor. The electronic device 100 may detect opening and closing of a leather case by using the magnetic sensor 180D. In some embodiments, when the electronic device 100 is a flip phone, the electronic device 100 can detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect a magnitude of an acceleration of the electronic device 100 in each direction (usually, on three axes). When the electronic device 100 is still, the acceleration sensor may detect magnitude and a direction of gravity. The acceleration sensor may be further configured to identify a posture of the electronic device, and is used in an application such as landscape/portrait orientation switching, a pedometer, and the like. In this application, the electronic device 100 may perform the landscape/portrait orientation switching and switching between single-screen display and large-screen display of a foldable screen based on a change of the acceleration and the gravity detected by the acceleration sensor 180E.

In embodiments of this application, when the electronic device detects that data collected by the sensor (for example, the acceleration collected by the acceleration sensor or the angle collected by the gyroscope) changes or is greater than a threshold, the electronic device considers that a current user is using the electronic device. If the electronic device detects, in a charging management and control process, that the user is using the electronic device, the electronic device re-predicts the first duration and the second duration.

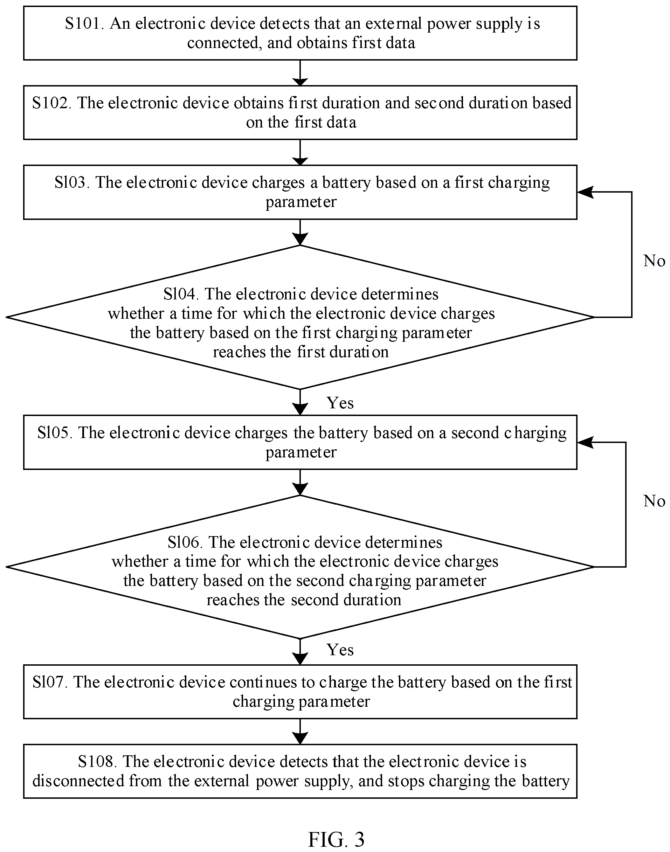

The following describes a charging management and control method provided in an embodiment of this application with reference to the accompanying drawings. FIG. 3 is a schematic flowchart of a charging management and control method according to an embodiment of this application. As shown in FIG. 3, the charging management and control method provided in the embodiment of this application specifically includes the following steps.

S101. An electronic device detects that an external power supply is connected, and obtains first data.

The electronic device may detect, by using the charging management module 140 shown in FIG. 2, whether an external power supply is connected. The external power supply is connected to the electronic device by using a charger. When the power management module receives charging input, the electronic device starts to obtain the first data. The first data is used to describe a charging scenario when the electronic device detects that the external power supply is connected. The first data includes one or more of: a time at which the electronic device detects that the external power supply is connected (that is, a time at which the power management module receives the charging input), a battery level of a battery when the electronic device is connected to the charger (that is, a battery level of the battery 142 in the electronic device 100), a quantity of battery cycles, a battery health status, a charger type, sensor data (for example, an accelerometer and a light sensor), screen-on/off information, an alarm clock ringing time that is set in the electronic device, a calendar schedule time, a to-do list time, a time zone in which the electronic device is located, or the like. The following uses an example in which the first data includes the time at which the electronic device detects that the external power supply is connected, the battery level when the electronic device is connected to the charger, and the charger type for description.

The electronic device may obtain a parameter such as the battery level, the quantity of battery cycles, and the battery health status by using the power management module 141 in FIG. 2.

The charger type can be distinguished by using an interface type and output power that are of the charger. Interface types of chargers may include a micro USB interface, a USB type-C interface, and a lightning interface of an IOS mobile phone. Output power of a charger may be 18 W (that is, an output voltage and an output current are respectively 9 V/2 A), 10 W (that is, the output voltage and the output current are respectively 5 V/2 A), 5 W (that is, the output voltage and the output current are respectively 5 V/1 A), or the like. When output power of a charger is different, time for the charger to fully charge the battery is different. Larger output power of a charger indicates a shorter time for the charger to fully charge the battery.

For different current charging time points of the electronic device, duration from a time when the electronic device is connected to the charger to a time when the electronic device is disconnected from the charger is different. It may be understood that duration for charging the electronic device by the user at daytime is different from duration for charging the electronic device at night. Generally, total duration of a charging process of the electronic device at night is longer than that at daytime. At night, the user inserts the charger into the electronic device to charge the electronic device before going to bed, and does not remove the charger until the user wakes up in the morning to end charging of the electronic device.

If a current battery level of the battery when the electronic device starts to be charged is different, a time at which the battery of the electronic device is fully charged is different. As a result, after the user inserts the charger, a time at which the charger is removed is also different. It may be understood that total duration for starting charging when the battery level is 20% is longer than total duration for starting charging when the battery level is 50%.

S102. The electronic device obtains first duration and second duration of current charging based on the first data.

Herein, the electronic device may have a first charging model and a second charging model. The electronic device may input the first data into the first charging model to obtain first predicted charging duration. The first duration and the second duration are obtained by inputting the first predicted charging duration to the second charging model, and the electronic device performs charging management and control on the charging process based on the first duration and the second duration. A start time of the second duration is later than or equal to an end time of the first duration. In a possible implementation, the charging model may include a first charging model and a second charging model. The first charging model and the second charging model may be two independent neural networks, or the first charging model and the second charging model may form a complete neural network. This is not limited in this embodiment of this application.

Herein, for how the electronic device obtains the first duration and the second duration based on the first charging model and the second charging model, refer to the following description. Details are not described herein.

S103. The electronic device charges the battery based on a first charging parameter.

Specifically, the electronic device may charge the battery 142 by using the charging management module 140 shown in FIG. 2. The first charging parameter may include one or more of a first charging cut-off voltage and first charging input power. Herein, it may be understood that when a voltage of the battery reaches the charging cut-off voltage, the electronic device may stop charging the battery. The first charging cut-off voltage may be 4.25 V, or may be another value. The first charging power may be 22.5 W, that is, a charging voltage is 4.5 V, and a charging current is 5 A. The first charging power may alternatively be another value. Specific values of the first charging cut-off voltage and the first charging input power are not limited in this embodiment of this application. It may be understood that because the input power is determined by an input voltage and an input current, the first charging parameter may further include a first input voltage and a first input current. When either of the first input voltage and the first input current changes, the first input power changes accordingly. Therefore, in the following description of this embodiment of this application, an example in which the first charging parameter includes the first charging cut-off voltage and the first charging input power is used for description.

S104. The electronic device determines whether a time in which the electronic device charges the battery based on the first charging parameter reaches the first duration; and if yes, performs S105, or if not, continues to perform S103.

If the time in which the electronic device charges the battery based on the first charging parameter reaches the first duration, the electronic device adjusts the charging parameter to charge the battery. If the time in which the electronic device charges the battery based on the first charging parameter does not reach the charging duration, the electronic device continues to charge the battery based on the first charging parameter. Herein, in the first duration, the first charging parameter may be constant, or may be a plurality of sets of parameters that can enable the electronic device to perform fast charging on the battery. This is not limited herein.

S105. The electronic device charges the battery based on a second charging parameter.

When the electronic device charges the battery based on the second charging parameter, the electronic device performs slow charging on the battery or stops charging the battery. Charging efficiency with which the electronic device performs charging based on the second charging parameter is lower than charging efficiency with which the electronic device performs charging based on the first charging parameter. The second charging parameter may include a second charging cut-off voltage and second charging input power. Herein, the second charging cut-off voltage is less than the first charging cut-off voltage. The second charging input power is less than the first charging input power. Specific values of the second charging cut-off voltage, a second charging rate, and the second charging input power are not limited in this embodiment of this application. It may be understood that there are two cases in which the electronic device charges the battery based on the second charging parameter. First, the electronic device performs slow charging on the battery. Second, the electronic device stops charging the battery.

In this embodiment of this application, an electronic device with higher charging efficiency takes shorter time to charge a same battery to a specific battery level (for example, the battery level is 100%). For example, it takes one hour for the electronic device to charge a battery whose battery level is 10% to 100% based on the first charging parameter. It takes three hours for the electronic device to charge the battery whose battery level is 10% to 100% based on the second charging parameter. It may be understood that the charging time for charging the battery by the electronic device based on the first charging parameter herein is merely an example for description, and constitutes no limitation on this embodiment of this application. Similarly, the charging time for charging the battery by the electronic device based on the second charging parameter is merely an example for description, and constitutes no limitation on this embodiment of this application.

In a possible implementation, that the electronic device charges the battery based on the second charging parameter includes: When the electronic device detects a first event, the electronic device stops charging the battery based on the second charging parameter, and starts to charge the battery based on a third charging parameter. Charging efficiency with which the electronic device charges the battery based on the third charging parameter is higher than the charging efficiency with which the electronic device charges the battery based on the second charging parameter. The first event includes one or more of the following: a quantity of screen-on times of the electronic device is greater than a first threshold; screen-on duration of the electronic device is greater than a second threshold; a quantity of screen-off times of the electronic device is greater than a third threshold; screen-off duration of the electronic device is less than a fourth threshold; or power consumption of the electronic device is greater than a fifth threshold. Further, that the electronic device starts to charge the battery based on a third charging parameter specifically includes: In third duration, the electronic device charges the battery based on the third charging parameter. In fourth duration, the electronic device charges the battery based on a fourth charging parameter. The charging efficiency with which the electronic device charges the battery based on the third charging parameter is higher than charging efficiency with which the electronic device charges the battery based on the fourth charging parameter. The third duration and the fourth duration are determined by second data, and the second data is used to describe a charging scenario when the first event is detected. The second data includes a time at which the electronic device detects the first event, a remaining battery level when the electronic device detects the first event, and the charger type.

Herein, the charging efficiency with which the electronic device charges the battery based on the third charging parameter may be greater than, equal to, or less than the charging efficiency with which the electronic device charges the battery based on the first charging parameter. The charging efficiency with which the electronic device charges the battery based on the fourth charging parameter may be greater than, equal to, or less than the charging efficiency with which the electronic device charges the battery based on the second charging parameter. Specific values of the third charging parameter and the fourth charging parameter are not limited herein.

In an example, in a process in which the electronic device charges the battery based on the second charging parameter, if the electronic device detects that the screen-on duration of the electronic device exceeds the first threshold (including the first threshold) or the quantity of screen-on times exceeds the second threshold (including the second threshold), or the quantity of screen-off times is greater than the third threshold (including the third threshold), or the screen-off duration is less than the fourth threshold (including the fourth threshold), the electronic device re-performs S102, that is, the electronic device re-predicts the first duration and the second duration. When the electronic device detects that the screen of the electronic device is turned on for a plurality of times or for a period of time in the charging process, it indicates that the user continues to use the electronic device in the charging process. In this case, the battery also discharges when being charged, to maintain normal working of each module in the electronic device. In this case, if the electronic device still performs slow charging on the battery, the battery level of the electronic device may be insufficient to support normal use of the user, or the battery is not fully charged when the user removes the charger. When detecting that the user uses the mobile phone in the process in which the electronic device charges the battery based on the second charging parameter, the electronic device re-predicts the first duration and the second duration of the current charging process based on a specific use status of the user. This can avoid a case in which the electronic device is always in a process of performing slow charging on the battery or stopping charging the battery when the user uses the electronic device, thereby avoiding a case in which the battery level is insufficient or the battery is not fully charged after the electronic device is disconnected from the charger.

In this embodiment of this application, the screen-on duration is a time period from a time at which no operation is performed on an unlocking page of the electronic device to a time at which the screen automatically turns off in the charging process of the electronic device. The screen-off duration is a time period from a time at which the screen of the electronic device automatically turns off to a time at which the screen turns on in the charging process of the electronic device. The quantity of screen-on times is a quantity of times that the screen is on in the charging process of the electronic device. The quantity of screen-off times is a quantity of times that the screen is off in the charging process of the electronic device.

In another example, in the process in which the electronic device charges the battery based on the second charging parameter, if a charging location of the electronic device is at home or in an office, when the electronic device detects that data (for example, an acceleration collected by an acceleration sensor or an angle collected by a gyroscope sensor) of a sensor in the electronic device changes or is greater than a threshold A, the electronic device re-performs S102, that is, the electronic device re-predicts the first duration and the second duration for battery charging. When the acceleration collected by the acceleration sensor in the electronic device or the angle of the gyroscope collected by the gyroscope sensor changes, it may be considered that the electronic device is not in a static state. It may be considered that the user is using the electronic device. In this case, the battery also discharges when being charged, to maintain normal working of each module in the electronic device. In this case, if the electronic device still performs slow charging on the battery, the battery level of the electronic device may be insufficient to support normal use of the user, or the battery is not fully charged when the user removes the charger. When detecting that the user uses the mobile phone in the process in which the electronic device charges the battery based on the second charging parameter, the electronic device re-predicts the first duration and the second duration of the current charging process based on a specific use status of the user. This can avoid a case in which the electronic device is always in a process of performing slow charging on the battery or stopping charging the battery when the user uses the electronic device, thereby avoiding a case in which the battery level is insufficient or the battery is not fully charged after the electronic device is disconnected from the charger.

In still another example, when the electronic device detects that the power consumption of the electronic device is greater than a threshold B, the electronic device re-performs S102, that is, the electronic device re-predicts the first duration and the second duration. When the power consumption of the electronic device is greater than the threshold B, the electronic device is in a working state, that is, the user is using the electronic device. In this case, the battery also discharges when being charged, to maintain normal working of each module in the electronic device. In this case, if the electronic device still performs slow charging on the battery, the battery level of the electronic device may be insufficient to support normal use of the user, or the battery is not fully charged when the user removes the charger. When detecting that the user uses the mobile phone in the process in which the electronic device charges the battery based on the second charging parameter, the electronic device re-predicts the first duration and the second duration of the current charging process based on a specific use status of the user. This can avoid a case in which the electronic device is always in a process of performing slow charging on the battery or stopping charging the battery when the user uses the electronic device, thereby avoiding a case in which the battery level is insufficient or the battery is not fully charged after the electronic device is disconnected from the charger.

S106. Determine whether a time in which the electronic device charges the battery based on the second charging parameter reaches the second duration. If yes, S107 is performed; if no, S105 continues to be performed.

If the time for which the electronic device charges the battery based on the second charging parameter reaches the second duration, the electronic device charges the battery based on the first charging parameter again. If the time in which the electronic device charges the battery based on the second charging parameter does not reach the second duration, the electronic device continues to charge the battery based on the second charging parameter.

S107. The electronic device continues to charge the battery based on the first charging parameter.

It may be understood that neither the first charging parameter nor the second charging parameter is a fixed value. Electronic devices of different users may have different first charging parameters and different second charging parameters.

In a possible implementation, S107 may be that the electronic device charges the battery based on a fifth charging parameter. The fifth charging parameter may be the same as or different from the first charging parameter. Charging efficiency with which the electronic device charges the battery based on the fifth charging parameter may be higher than the charging efficiency with which the electronic device charges the battery based on the first charging parameter. The charging efficiency with which the electronic device charges the battery based on the fifth charging parameter may alternatively be less than the charging efficiency with which the electronic device performs charging based on the first charging parameter, but is higher than the charging efficiency with which the electronic device performs charging based on the second charging parameter. Alternatively, the fifth charging parameter may be the same as a charging parameter used when the battery is charged at daytime (for example, in 24 hours, a time period from 7:00 a.m. to 22:00 p.m. is a daytime period). A specific value of the fifth charging parameter is not limited in this embodiment of this application.

In this embodiment of this application, the electronic device may perform S107, or may not perform S107. For example, if the user starts charging at 11:00 p.m., the electronic device predicts that the user ends charging at 7:30 a.m. the next day. The user actually disconnects the electronic device from the external power supply at 8:00 a.m.. In this case, the electronic device performs S107 from 7:30 a.m. to 8:00 a.m.. If the user actually disconnects the electronic device from the external power supply at 7:00 a.m., the electronic device still charges the battery in the second charging duration at 7:00 a.m.. After the electronic device is disconnected from the external power supply, the electronic device directly performs S108 to stop charging the battery. The electronic device does not perform S107. S108. The electronic device detects that the electronic device is disconnected from the external power supply, and stops charging the battery.

When the user removes the charger, the electronic device is disconnected from the external power supply, and the electronic device stops receiving the charging input from the external power supply. The electronic device stops charging the battery.

Further, after the battery charging ends, the electronic device may record actual first duration and actual second duration in the current charging process. It may be understood that the user may remove the charger in a process in which the electronic device charges the battery based on the first charging parameter. In this case, the actual first duration is less than or equal to the first duration, and the actual second duration is equal to 0. The electronic device adjusts a parameter in the second charging model (for example, when the second charging model is a neural network, a learning rate and a weight change rate of the neural network) by using the actual first duration and the actual second duration in the current charging process, so that the first duration and the second duration that are output by the second charging model are more accurate and more in line with a charging habit of the user. Therefore, charging management and control can be better performed. This can reduce a case in which the user continues to charge the battery in the fully charged state in the battery charging process of the electronic device.

In a possible implementation, the method provided in this embodiment of this application further includes: Before the electronic device obtains the first duration and the second duration of the current charging based on the first data, the electronic device obtains an alarm clock time or a to-do list time in a schedule. The electronic device uses the alarm clock time or the to-do list time as the end time of the current charging. The electronic device does not predict the first duration and the second duration of the current charging based on the first data. For example, if the user starts to connect the charger to the electronic device at 10:00 p.m. to charge the electronic device, and the user sets an alarm clock at 6:00 a.m. tomorrow morning, when the electronic device detects alarm clock information, the electronic device directly uses 6:00 a.m. tomorrow morning as the charging end time at which the user removes the charger. In this case, the electronic device does not perform S102 to S108. The electronic device may stop charging when the battery level reaches a threshold, then continues to charge the battery in a period of time before the alarm clock time, and ends charging when the user removes the charger. Alternatively, the first duration may be set to a fixed value. The electronic device charges the battery, stops charging when the first duration expires, then continues to charge the battery in a period of time before the alarm time, and ends charging when the user removes the charger. Alternatively, the first duration may be set to a fixed value, and the electronic device charges the battery based on the first charging parameter. When the first duration expires, the electronic device charges the battery based on the second charging parameter, and then continues to charge the battery based on the third charging parameter or the first charging parameter before the alarm time, and the charging ends when the user removes the charger.

In a possible implementation, when the electronic device detects that the electronic device is connected to the charger, the electronic device obtains a user-preset time point, and the preset time point includes the alarm clock ringing time and the to-do list reminder time point. The electronic device performs fast charging on the battery; when the battery level reaches a first threshold (for example, 70%), the electronic device starts to perform slow charging on the battery, and keeps performing slow charging until the preset time point arrives; and when the user removes the charger, the electronic device stops charging the battery. If the user does not remove the charger, the electronic device may be in a charging continuing state, or may be in a charging stopped state.

In another possible implementation, the electronic device detects that the electronic device is connected to the charger, and the electronic device obtains the user-preset time point. The preset time point includes the alarm clock ringing time, the to-do list reminder time point, the reminder time point in a calendar, and a reminder time point in a memo. The electronic device performs fast charging on the battery, and when the battery level reaches a first threshold (for example, 70%) after the battery is charged, the electronic device starts to perform slow charging on the battery or stops charging the battery. The electronic device continues to perform fast charging on the battery when the first time point arrives, and the electronic device stops charging the battery when the user removes the charger when the preset time point arrives.

Further, in a possible implementation, when a plurality of alarm clock ringing times are set by the user, the electronic device uses an earliest alarm clock ringing time as the time point at which the electronic device ends charging. For example, the user sets three alarm ringing time points 6:00 a.m., 6:30 a.m., and 6:45 a.m. in the morning. When the electronic device performs charging at 11:00 p.m., the electronic device ends charging at 6:00 a.m. (the user does not disconnect the electronic device from the external power supply in an entire charging process).

Further, in another possible implementation, when a plurality of alarm clock ringing times are set by the user, the electronic device knows through learning that the user disconnects the electronic device from the external power supply at a first alarm clock ringing time at most, so that the electronic device uses the first alarm clock ringing time as the time point at which the electronic device ends charging. For example, the user sets three alarm ringing time points 6:00 a.m., 6:30 a.m., and 6:45 a.m. in the morning. The electronic device knows through learning that the user usually disconnects the electronic device from the external power supply at 6:30 a.m.. In this case, the first alarm clock ringing time is 6:30 a.m. To be specific, when the electronic device performs charging at 11:00 p.m., the electronic device ends charging at 6:30 a.m. (the user does not disconnect the electronic device from the external power supply in an entire charging process).

It may be understood that the specified alarm clock ringing time is within the first time period after the external power supply is connected. The first time period may be 10 hours or 12 hours after the external power supply is connected (counting starts when the external power supply is connected), or the first time period may be 10 hours or 12 hours, or may be 16 hours and the like. This is not specifically limited herein. For example, the first time period is 12 hours. The user starts to connect the electronic device to the external power supply for charging at 11:00 p.m. on March 1, 2020. If an alarm clock that is set in the electronic device is before 11:00 a.m. on March 2, 2020 (for example, an alarm clock at 7:00 a.m. on March 2, 2020), the electronic device does not perform S101 to S108. After charging, based on a daytime charging parameter, the battery to a battery level of 80%, the electronic device stops charging, and starts charging the battery based on the daytime charging parameter again half an hour before the alarm clock rings, that is, 6:30 a.m. on March 2, 2020. If the alarm clock that is set in the electronic device is after 11:00 a.m. on March 2, 2020 (for example, 7:00 a.m. on March 3, 2020), the electronic device charges the battery according to S101 to S108.

In this way, the battery is charged according to a specific plan of the user (for example, a wake-up alarm clock). This can reduce a case in which the battery is not fully charged when the user removes the charger to end charging.

In a possible implementation, the electronic device obtains a current time. If the current time is a time in a preset time period, the electronic device performs S101 to S108, that is, performs charging management and control. For example, if the preset time is a night time period, for example, a time period from 11:00 p.m. to 6:00 a.m., when the user connects the electronic device to the external power supply for charging between 6:00 a.m. and 11:00 p.m. (for example, between 6:00 a.m. on April 26 and 11:00 p.m. on April 26), the electronic device does not perform charging management and control. The electronic device performs charging management and control only when the user charges the electronic device in a time period from 11:00 p.m. to 6:00 a.m. the next day (for example, from 11:00 p.m. on April 26 to 6:00 a.m. on April 27). The night time period may alternatively be another time period, for example, from 20:00 p.m. to 5:00 a.m. the next day. This is not limited in this application. The user may set the preset time by using a user interface of the electronic device and may modify the preset time; or the preset time may be preconfigured before delivery of the electronic device, and cannot be modified by the user. The preset time is not limited in this application.

In the night time period, the first charging parameter may be the same as the charging parameter at daytime, and is not specially set, or may be different from the charging parameter in the daytime. In the night time period, the second charging parameter may be a charging parameter used when charging stops, or may be a charging parameter in a slow charging state. In the night time period, the third charging parameter may be the same as the first charging parameter, or may be the same as the charging parameter at daytime.

In a possible implementation, a cut-off time for charging the battery by the electronic device based on the second charging parameter is a first preset time. For example, the first preset time is 5:30 a.m. The second duration predicted by the electronic device starts from 1:00 a.m. and ends at 7:00 a.m. However, the electronic device stops charging the battery in the second charging duration at 5:30 a.m.

In a possible implementation, only when a time obtained by the electronic device is a time in the preset time period, and the first duration and the second duration predicted by the electronic device are not less than 4 hours, the electronic device performs charging management and control on a charging process based on the predicted first duration and second duration, that is, the electronic device performs S101 to S108, to be specific, performs management and control on the charging process.

The following describes in detail how to specifically implement S102, that is, how the electronic device obtains the first duration and the second duration based on the first data.

Further, in a possible implementation, the first charging model may be obtained through training by using actual charging duration from start charging to end charging of a plurality of users, a time at which charging starts, a battery level of the battery when the charging starts, a battery level of the battery when the charging ends, and a time zone in which the electronic device is located that are collected by R&D personnel of a mobile phone manufacturer. Input of the training data of the first charging model is a time at which the electronic device detects that an external power supply is connected, a remaining battery level when the electronic device detects that the external power supply is connected, a time zone in which the electronic device is located, average charging duration in a week, a battery level, power consumption of the electronic device, data collected by a sensor (for example, acceleration collected by an acceleration sensor), a charger type, and whether a charging time is during a holiday. Output of the training data of the first charging model is actual charging duration. Then, the electronic device may adjust the first charging model based on a difference between predicted charging duration output by the first charging model and the actual charging duration. In this way, predicted charging duration output by the first charging model may be closer to actual charging duration. The electronic device may evaluate the confidence level of the first charging model based on the difference between the predicted charging duration and the actual charging duration, a battery level of the battery when the predicted charging duration expires and a battery level of the battery when the actual charging ends. For example, it is assumed that in the data collected by the mobile phone manufacturer, a plurality of users start to plug in the charger to charge the electronic device from 10:00 a.m., a battery level is 20% when charging starts, charging ends after one hour, and a battery level of the electronic device is 100% when charging ends. When a received charging start time is 10:00 a.m., and the battery level is 20% when charging starts, the first charging model trained by using the data outputs that the charging ends at 11:00 a.m., or outputs that the predicted charging duration is 1 hour.

In an example, the first charging model may be implemented based on a GRU (Gated Recurrent Unit, gated recurrent unit) neural network. In this embodiment of this application, the first charging model may alternatively be implemented by using another neural network or algorithm. This is not limited herein.

In a possible implementation, before the electronic device performs S101, the electronic device collects historical charging data of a specific user to train the second charging model.

In a possible implementation, the second charging model is obtained by training based on the historical charging data of the specific user and the predicted charging duration output by the first charging model. The historical charging data of the specific user may include a time at which the electronic device detects that the external power supply is connected, actual charging duration, a battery level of the battery when the electronic device is connected for charging, and the like in each of a plurality of charging processes of the user within a period of time. Input of training data of the second charging model is predicted charging duration obtained by inputting the historical charging data of the specific user into the first charging model. Output of the training data of the second charging model is the first charging duration and the second charging duration. An initial value of the first charging duration is equal to the actual charging duration. An initial value of the second charging duration is equal to 0. The first duration output by using the second charging model obtained through training in this way is infinitely close to the actual charging duration, and the second duration is infinitely close to 0. When the user enables the electronic device to charge the battery for a long time, a value of the second duration is supposed to be larger. In this way, charging duration of a battery in a fully charged state may be shorter. However, if the second duration is excessively long, the battery is not fully charged when the charging ends. To ensure that the electronic device charges the battery in the fully charged state for a shorter time, and ensure that the battery is fully charged when the charging ends, in this application, the first charging duration and the second charging duration in the training data are corrected by using a first correction. The first charging duration is obtained by subtracting the first correction from actual charging duration of a specific user, and the second charging duration is equal to the first correction. The first correction is determined based on a confidence level of the first charging model.

In a possible implementation, a training process of the second charging model may be as follows:

① First, the electronic device inputs a set of historical charging data (a time t1 at which the electronic device detects that an external power supply is connected, a remaining battery level when the electronic device detects that the external power supply is connected, and a charger type) of a specific user into the first charging model. In the set of historical charging data, a time at which the electronic device stops charging the battery is t2, and actual charging duration is t2-t1. The first charging model is used to obtain second predicted charging duration. The output of the second charging model is first charging duration t (first) and second charging duration t (second). An initial value of t (first) is t2-t1, and an initial value of t (second) is 0.

② The electronic device inputs the second predicted charging duration into the second charging model, to obtain t (first) and t (second). That is, t (first) and t (second) are the output of the second charging model. The first duration output by using the second charging model obtained through training in this way is infinitely close to the actual charging duration, and the second duration is infinitely close to 0. However, a value of the second duration output by the second model needs to be larger, and a value of the first duration needs to be smaller. In this way, it can be ensured that charging duration when the battery is charged in the fully charged state in a charging process is shorter. However, the value of the second duration cannot be excessively large, otherwise the battery is not fully charged when the charging ends. Therefore, the training data of the second charging model needs to be corrected. In this way, the first duration and the second duration that are output by using the trained second charging model can enable the electronic device to charge the battery in the fully charged state for a time as short as possible. In addition, the battery is fully charged when the charging ends.

Herein, the first correction f-delta may be obtained by the electronic device based on a yield, a false alarm rate, and the confidence level that are obtained based on the first charging model. The first correction is used to correct t (first) and t (second).

③ Corrected output of the training data of the second charging model is first charging duration t1 (first) and second charging duration t1 (second).

$$t1 \text{ (first)} = t \text{ (first)} - \text{f-delta}$$

$$t1 \text{ (second)} = t \text{ (second)} + \text{f-delta}$$

The first correction depends on the confidence level of the first charging model and a battery parameter when the electronic device of the specific user detects that the external power supply is connected. A correction function grows with the confidence level, but converges when the correction function grows to a specific value. A higher confidence level indicates shorter first duration and longer second duration.

Further, in a possible implementation, if f-delta is less than a threshold, the first charging duration and the second charging duration do not need to be corrected.

It may be understood that because charging behaviors of users may be different, parameters of second charging models in electronic devices of the users may be different. Therefore, for a same charging start time and a same battery level when charging starts, second charging models in different electronic devices of the users output different first duration and different second duration. In this way, a charging habit of each user is better satisfied, and charging management and control can be better performed on a charging process of each user.

In a possible implementation, the first charging model and the second charging model exist in a cloud server (for example, Huawei cloud) provided by an electronic device vendor. The user logs in to a cloud service account on the electronic device of the user, and the cloud server collects training data to train the first charging model and the second charging model. Each time the user starts charging, the electronic device sends the collected first data to the cloud server. After the first duration and the second duration are obtained by using the first charging model and the second charging model in the cloud server, the first duration and the second duration are sent to the electronic device. In this way, the electronic device does not need to store the first charging model and the second charging model, thereby saving memory space of the electronic device.

In a possible implementation, the first charging model and the second charging model exist in the electronic device of the user. This avoids a case in which the user performs charging when no network is connected and the first duration and the second duration of the current charging that are predicted by the charging model cannot be obtained.

In a possible implementation, the historical charging data of the electronic device of the user further includes charging location information, for example, information such as charging at home, in an office, or outdoors. In different places, total duration from starting charging when the user connects the charger to the electronic device to ending charging varies. The second charging model is trained with reference to different location information, so that the first duration and the second duration that are output by the second charging model can better comply with a charging habit of the user, and charging management and control can be better performed on a charging process of the battery in the electronic device.

In a possible implementation, the first duration is obtained by inputting the first data to the first charging model. The second duration is calculated based on the first duration, duration for which the sensor does not work, and screen-off duration.

An embodiment of this application provides a charging management and control method. The method specifically includes: First, an electronic device may learn and train a charging model based on historical charging data of a user. When the electronic device detects that a charger is connected, the charging model may predict first duration and second duration of current charging. If a time for which the electronic device charges a battery based on a first charging parameter reaches the first duration, the electronic device charges the battery based on a second charging parameter. If a time for which the electronic device charges the battery based on the second charging parameter reaches the second duration, the electronic device charges the battery based on the first charging parameter again. Finally, when detecting that the electronic device is disconnected from the charger, the electronic device stops charging the battery. In this way, in a charging process of the electronic device, charging management and control can be better performed on the electronic device of each user, and duration for which the battery in the electronic device of each user continues to be charged in a fully charged state can be reduced.

To better explain the charging management and control method provided in the embodiment of this application, embodiments of this application show schematic diagrams of user interfaces on which an electronic device performs charging management and control on a battery in different scenarios as examples.

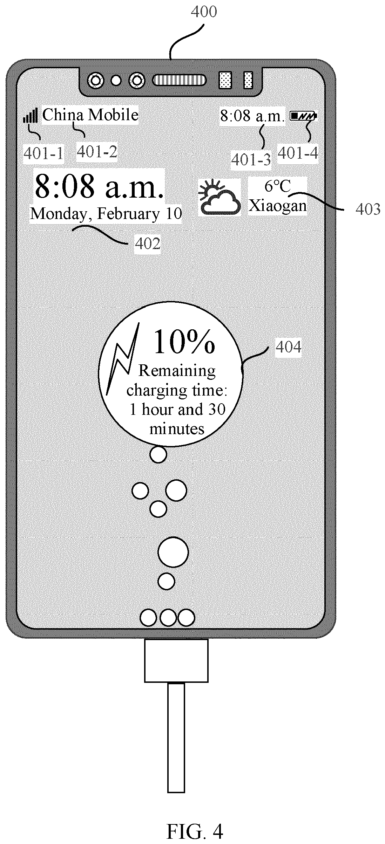

FIG. 4 is a schematic diagram of a user interface for charging a battery by an electronic device of a user A. The user interface 400 shown in FIG. 4 may include one or more signal strength indicators 401-1 of a mobile communication signal (which may also be referred to as a cellular signal), an indicator 401-2 of an operator of the mobile communication signal, time indicators 401-3 and 402, a battery status indicator 401-4, a weather indicator 403, and a charging status indicator 404. The charging status indicator may indicate that the electronic device is charging the battery, and display a remaining battery level when the electronic device detects that an external power supply is connected (for example, "10%" shown in FIG. 4), and a prompt of remaining charging time (for example, a prompt text "remaining charging time: 1 hour and 30 minutes" shown in FIG. 4). It can be learned from the figure that, the user A connects a charger to the electronic device at 8:08 a.m., and the electronic device detects that the remaining battery level is 10% when the external power supply is connected. The electronic device predicts that current charging duration is 1 hour and 30 minutes.

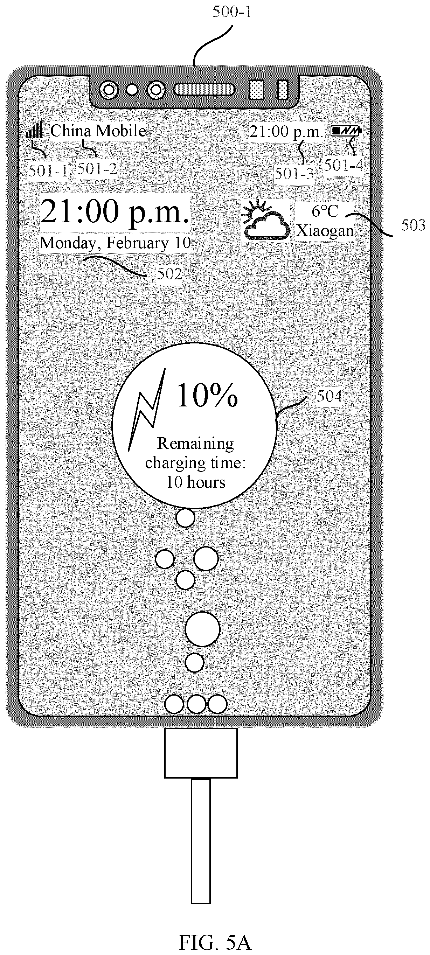

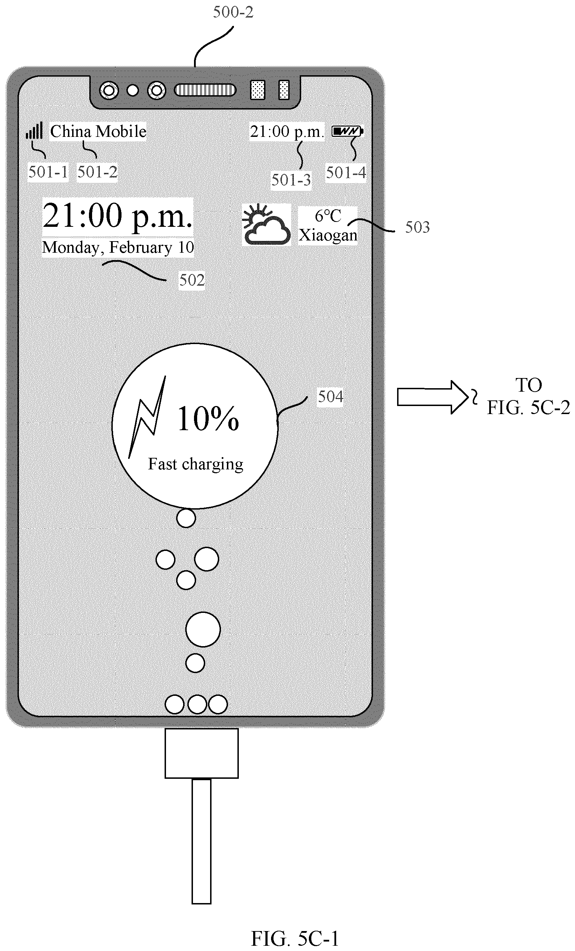

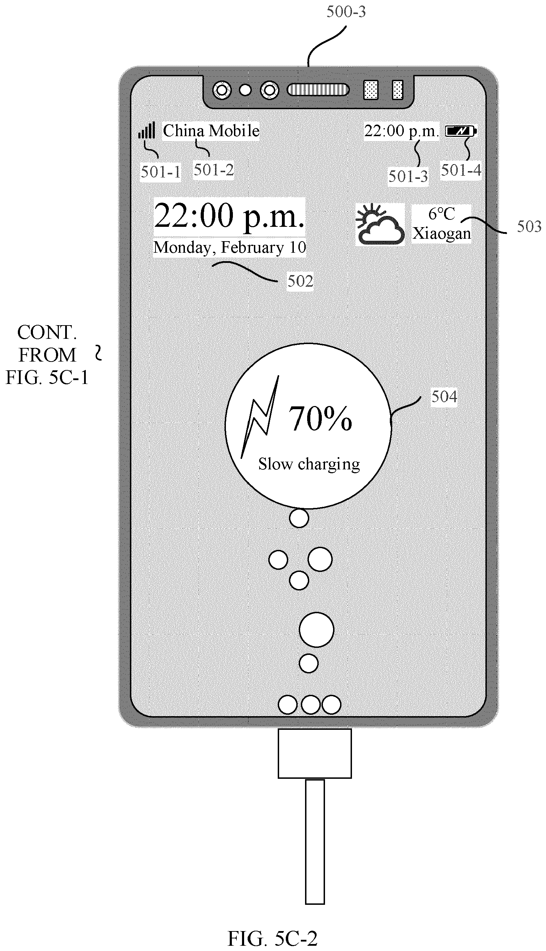

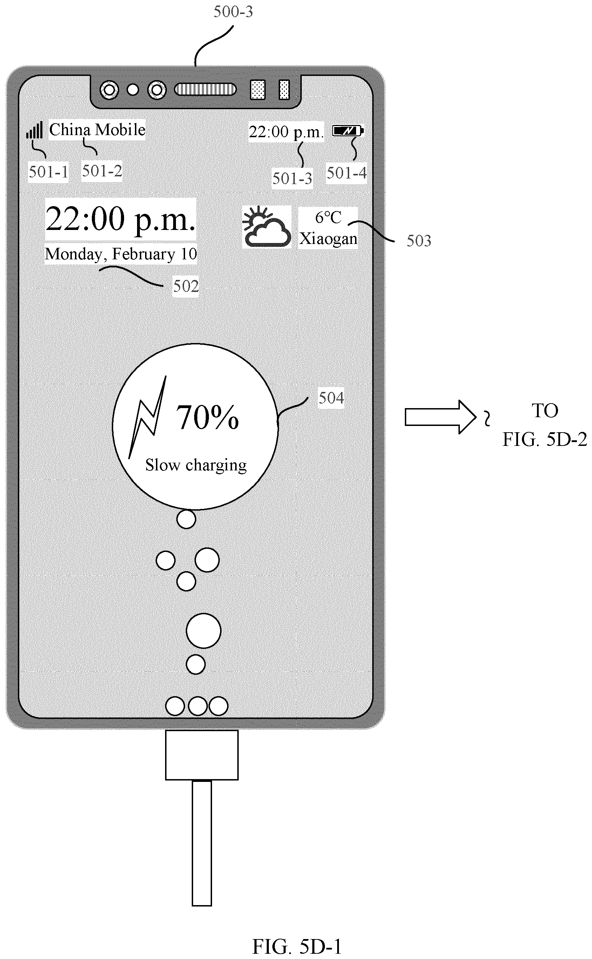

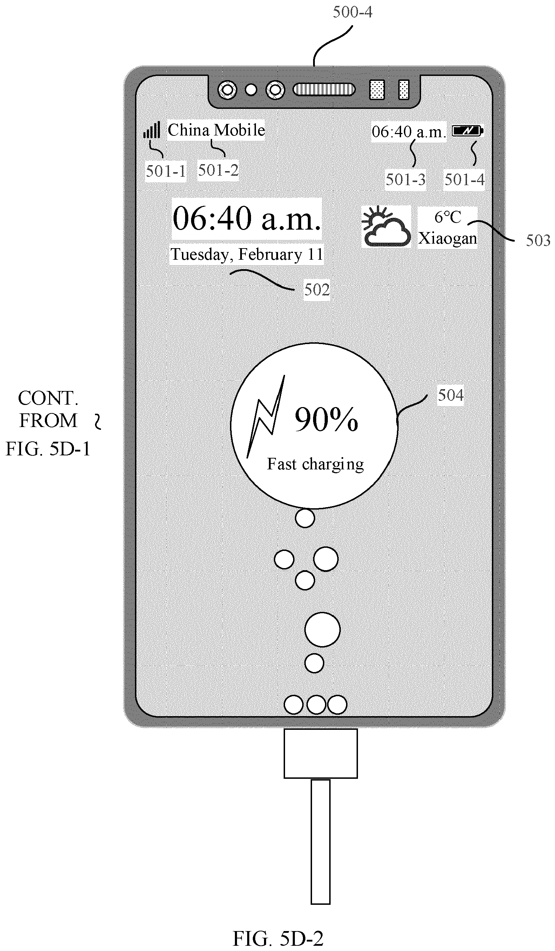

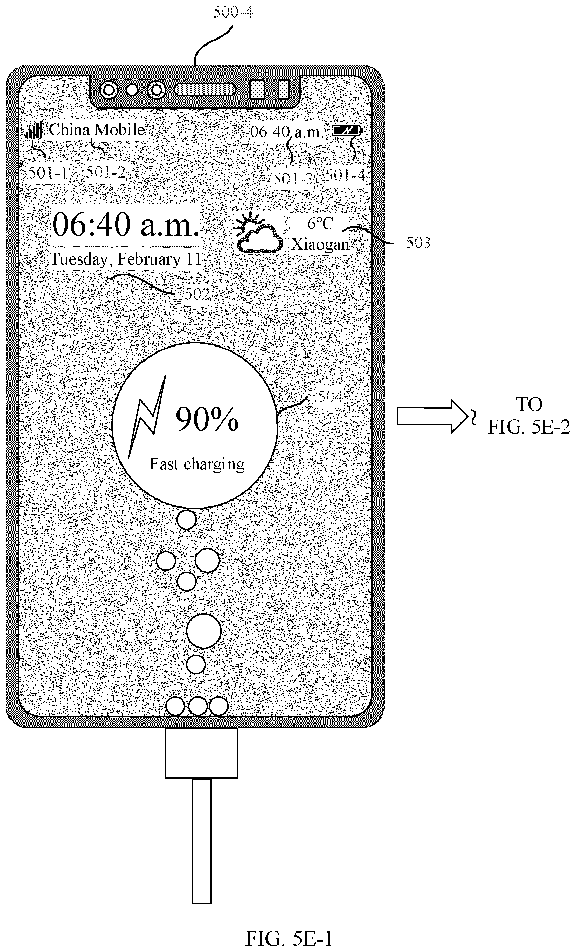

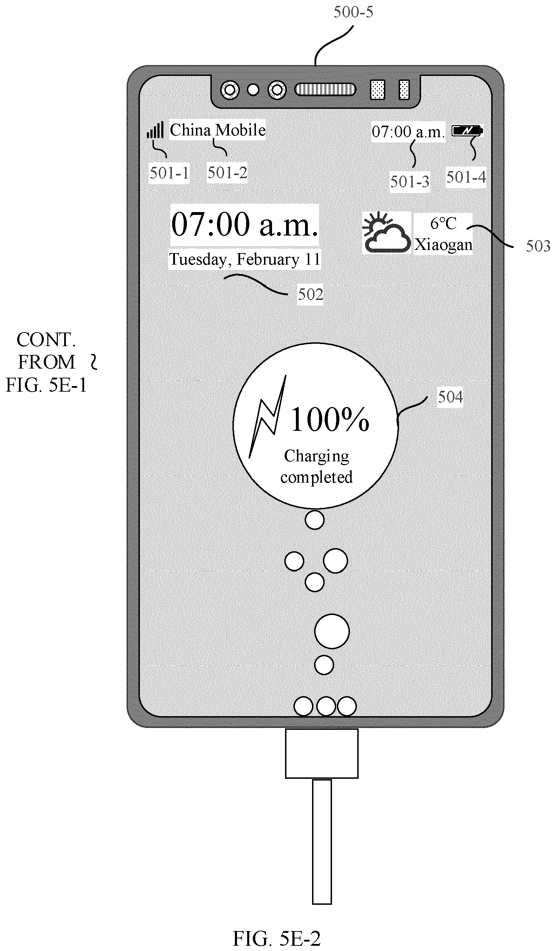

FIG. 5A is a schematic diagram of a user interface for charging a battery by an electronic device of a user A. The user interface 500-1 may include one or more signal strength indicators 501-1 of a mobile communication signal (which may also be referred to as a cellular signal), an indicator 501-2 of an operator of the mobile communication signal, time indicators 501-3 and 502, a battery status indicator 501-4, a weather indicator 503, and a charging status indicator 504. The charging status indicator may indicate that the electronic device is charging the battery, and display a remaining battery level when the electronic device detects that the external power supply is connected (for example, "10%" shown in FIG. 5A), and a prompt of remaining charging time (for example, a prompt text "remaining charging time: 10 hours" shown in FIG. 5A). In the charging scenario shown in FIG. 5A, the user A connects a charger to the electronic device at 21:00 p.m. (a specific time is 21:00 p.m. on Monday, February 10), and the electronic device detects that the remaining battery level is 10% when the external power supply is connected. In this case, the electronic device predicts that current charging duration is 10 hours.

By comparing FIG. 4 and FIG. 5A, it can be learned that the remaining battery levels when the electronic device detects that the external power supply is connected are the same, while time points at which the electronic device detects that the external power supply is connected are different. The charging duration predicted by the electronic device is different. The predicted charging duration at daytime is short, and the predicted charging duration at night is longer. At daytime, the user usually removes the charger in time after the battery is fully charged. Because the user is sleeping, the user does not remove the charger in time at night. Therefore, the predicted charging duration is different in different time scenarios. In this way, a charging habit of the user is better satisfied.

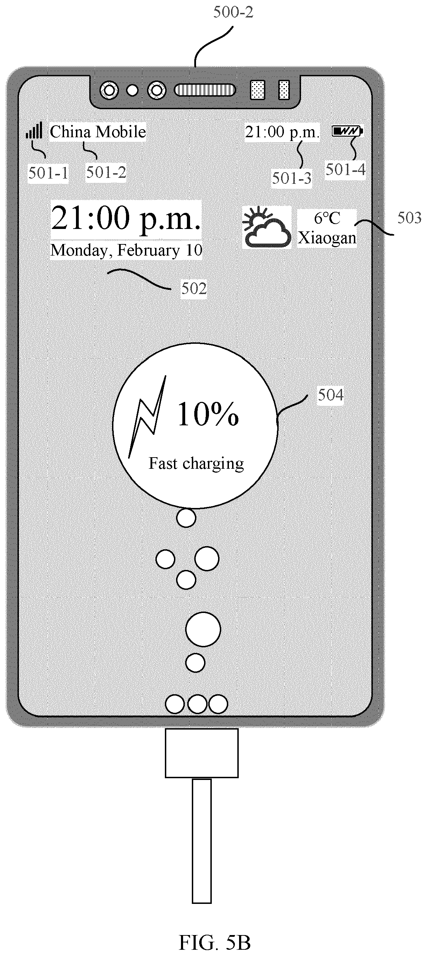

FIG. 5B is a schematic diagram of a user interface for charging the battery by the electronic device of the user A. The user interface 500-2 may include one or more signal strength indicators 501-1 of a mobile communication signal (which may also be referred to as a cellular signal), an indicator 501-2 of an operator of the mobile communication signal, time indicators 501-3 and 502, a battery status indicator 501-4, a weather indicator 503, and a charging status indicator 504. The charging status indicator may indicate that the electronic device is charging the battery, and display a remaining battery level (for example, "10%" shown in FIG. 5B) when the electronic device detects that the external power supply is connected, and a charging status prompt (for example, a prompt text "fast charging" shown in FIG. 5B). A charging scenario shown in FIG. 5A is the same as the charging scenario shown in FIG. 5B, and details are not described herein again. Herein, the charging status indicator may not display a remaining charging time, but indicate whether the electronic device performs fast charging or slow charging on the battery. Content specifically displayed in the charging status indicator is not limited in this embodiment of this application.

FIG. 5C-1 and FIG. 5C-2 are a schematic diagram of user interfaces for charging the battery by the electronic device of the user A. FIG. 5C-1 and FIG. 5C-2 show that the electronic device charges the battery from the power 10% shown in the user interface 500-2 to 70% shown in the user interface 500-3. A prompt text "slow charging" is displayed in the charging status indicator 504 in the user interface 500-3. The electronic device starts to perform slow charging on the battery at this time. In this case, a time displayed on the electronic device is 22:00 p.m. It may be understood that when the electronic device changes from a fast charging state to a slow charging state, the electronic device may turn on a screen for display for several seconds, and then turn off the screen.

FIG. 5D-1 and FIG. 5D-2 are a schematic diagram of user interfaces for charging the battery by the electronic device of the user A. FIG. 5D-1 and FIG. 5D-2 show that the electronic device charges the battery from a battery level of 70% shown in the user interface 500-3 to 90% shown in the user interface 500-4. A prompt text "fast charging" is displayed in the charging status indicator 504 in the user interface 500-4. The electronic device performs slow charging on the battery. A time displayed on the electronic device is 6:40 a.m. on Tuesday, February 11.

FIG. 5E-1 and FIG. 5E-2 are a schematic diagram of user interfaces for charging the battery by the electronic device of the user A. FIG. 5E-1 and FIG. 5E-2 show that the electronic device charges the battery from a battery level of 90% shown in the user interface 500-4 to 100% shown in the user interface 500-5. A prompt text "charging completed" is displayed in the charging status indicator 504 on the user interface 500-5. In this case, the battery level is 100%, and the time displayed on the electronic device is 7:00 a.m. on Tuesday, February 11. That is, it takes 10 hours for the electronic device to charge the battery from the battery level of 10% to 100%.

It may be understood that, when a charging status of the electronic device changes (for example, from the fast charging state to the slow charging state, or from the slow charging state to the fast charging state) or when the battery level of the electronic device reaches 100%, the electronic device may turn on the screen for display for a few seconds, and then turn off the screen.

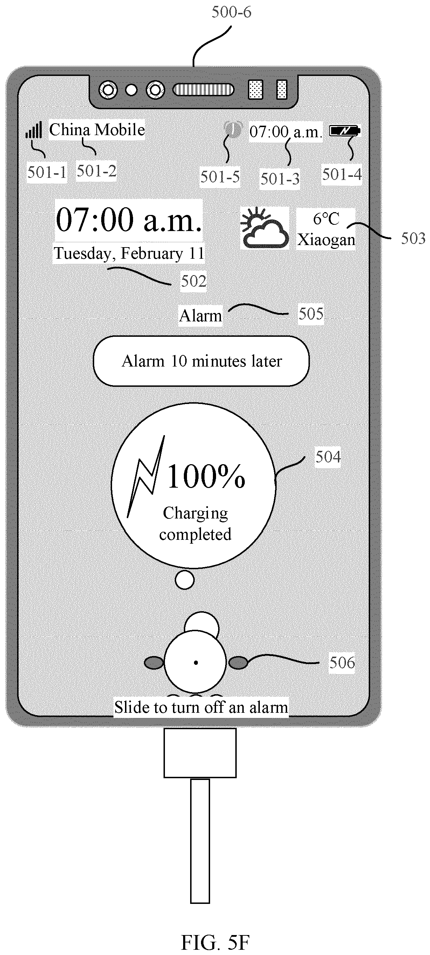

Optionally, FIG. 5F is a schematic diagram of a user interface for charging the battery by the electronic device of the user A. An alarm clock setting prompt 501-5 may be displayed on a user interface 500-6. The alarm clock setting prompt 501-5 indicates that the user has set an alarm clock. For example, the user sets an alarm clock of 7:00 a.m. on Tuesday, February 11. The time displayed on the electronic device is 7:00 a.m. on Tuesday, February 11, and the electronic device starts to display an alarm clock prompt 505 and play an alarm clock ring. The user may disable the alarm clock ring by using a control element 506.

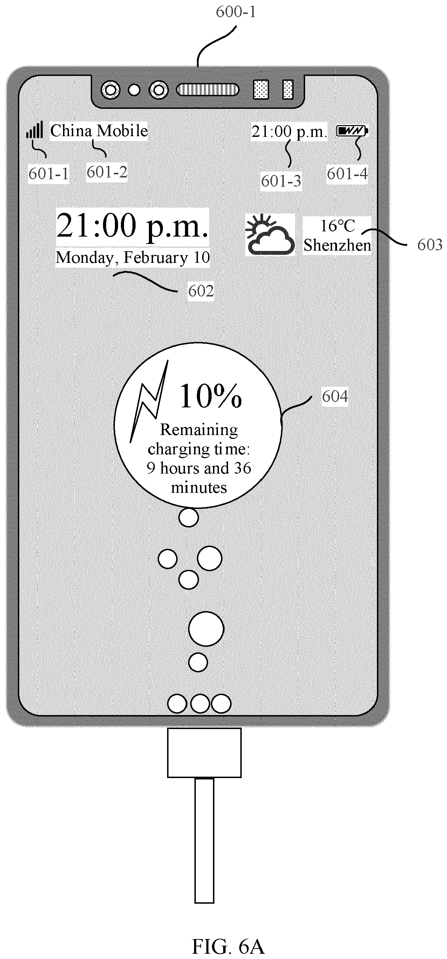

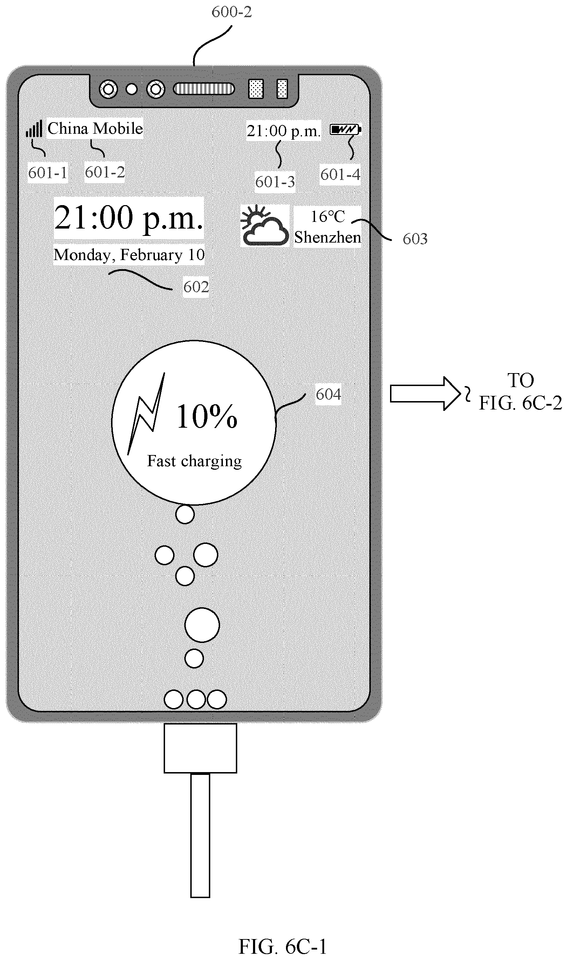

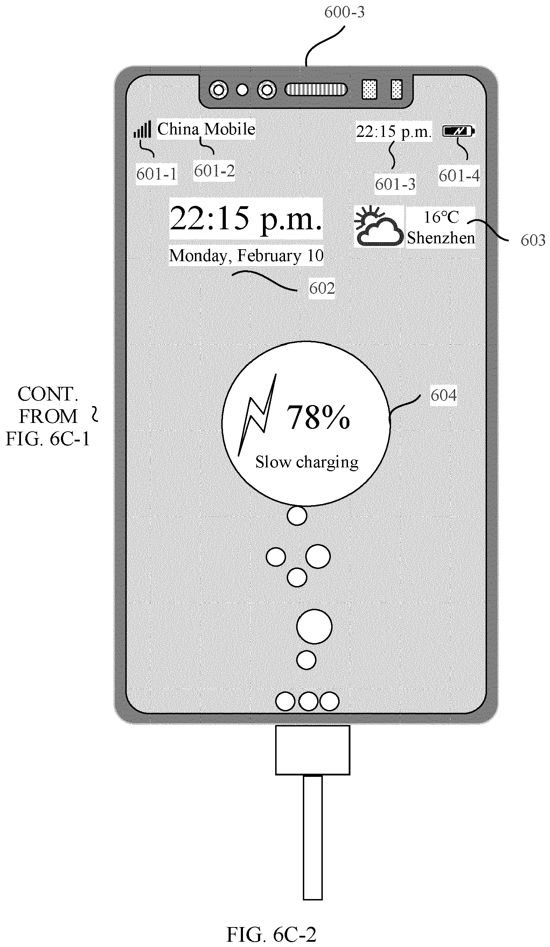

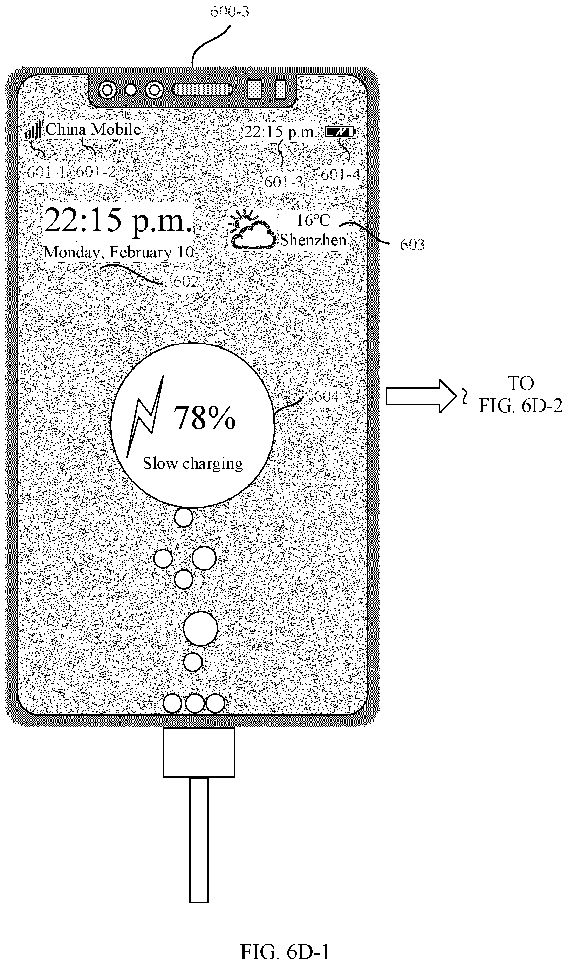

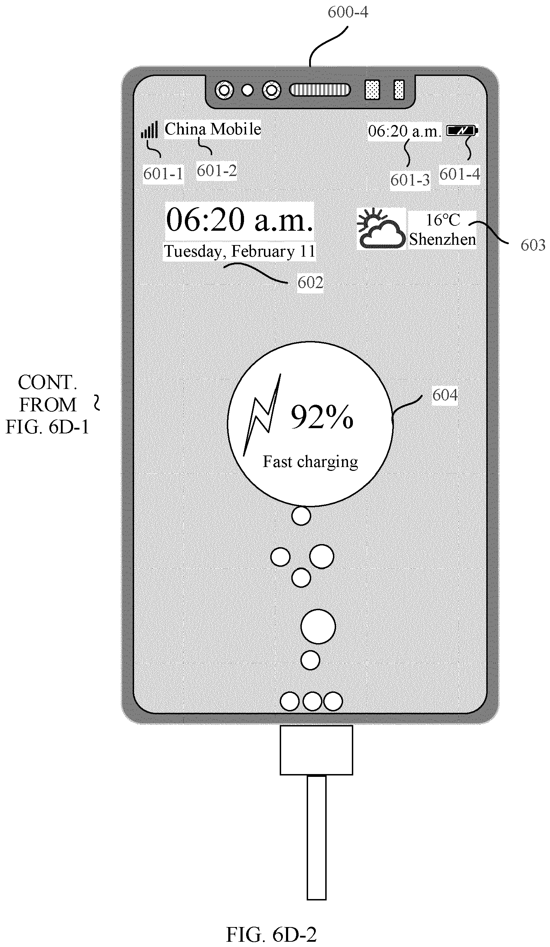

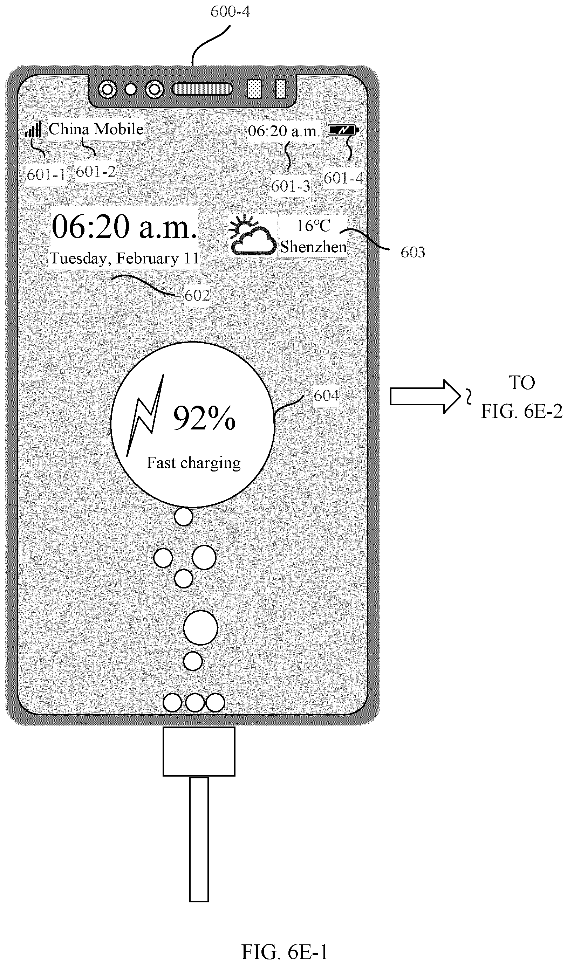

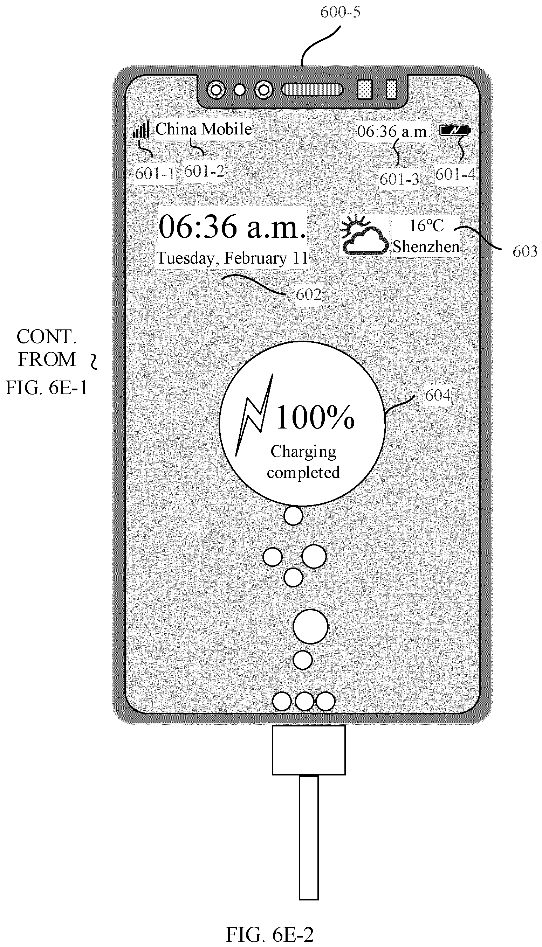

FIG. 6A to FIG. 6E-2 are schematic diagrams of user interfaces for charging a battery by an electronic device of a user B according to an embodiment of this application. A charging scenario shown in FIG. 6A is the same as the charging scenario of the user A shown in FIG. 5A, and the user B also connects the electronic device to a charger from 21:00 p.m. The remaining battery level when the electronic device detects that an external power supply is connected is 10%. However, the user A and the user B have different charging habits. The user A usually gets up at about 7:00 a.m. and removes the charger. The user B gets up at about 6:40 a.m. and removes the charger. Therefore, a remaining charging time predicted by the electronic device of the user B (for example, "a remaining charging time is 9 hours and 36 minutes" shown in FIG. 6A) is different from a remaining charging time predicted by the electronic device of the user A (for example, "a remaining charging time is 10 hours" shown in FIG. 5A). In this way, a personal habit of the user is better satisfied.

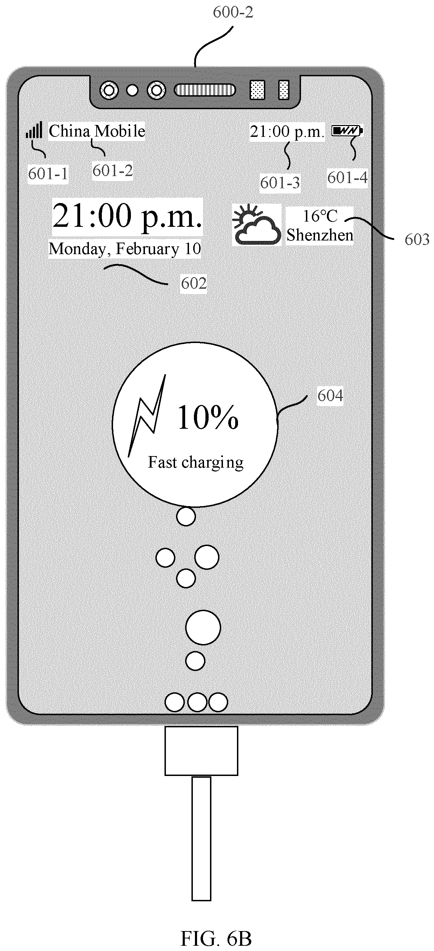

FIG. 6B is a schematic diagram of a user interface for charging the battery by the electronic device of the user B. A charging state prompt in the user interface of the electronic device may also be shown as a charging state prompt 604 in a user interface 600-2. The charging state prompt may indicate that the electronic device performs fast charging on the battery.

FIG. 6C-1 and FIG. 6C-2 are a schematic diagram of user interfaces for charging the battery by the electronic device of the user B. FIG. 6C-1 and FIG. 6C-2 show that the electronic device charges the battery from a battery level of 10% shown in the user interface 600-2 to 78% shown in the user interface 600-3. As is displayed on the user interface 600-3, a time displayed on the electronic device of the user B is 22:15 p.m. on Monday, February 10, the battery level is 78%, and the electronic device performs slow charging on the battery. Compared with the electronic device of the user A, the electronic device of the user B performs slow charging on the battery at a different time.

FIG. 6D-1 and FIG. 6D-2 are a schematic diagram of user interfaces for charging the battery by the electronic device of the user B. FIG. 6D-1 and FIG. 6D-2 show that the electronic device charges the battery from a battery level of 78% shown in the user interface 600-3 to 92% shown in the user interface 600-4. A prompt text "fast charging" is displayed in the charging status indicator 604 in the user interface 600-4. The electronic device performs slow charging on the battery. A time displayed on the electronic device is 6:20 a.m. on Tuesday, February 11.

FIG. 6E-1 and FIG. 6E-2 are a schematic diagram of user interfaces for charging the battery by the electronic device of the user B. FIG. 6E-1 and FIG. 6E-2 show that the electronic device charges the battery from a battery level of 92% shown in the user interface 600-4 to 100% shown in the user interface 600-5. As is displayed on the user interface 600-4, a time displayed on the electronic device of the user B is February 11 at 6:36 a.m. on Tuesday, and the battery level is 100%. The electronic device completes charging the battery. Compared with the electronic device of the user A, the electronic device of the user B takes a shorter time to charge the battery from the battery level of 10% to 100%.

The electronic device may predict charging duration, first duration, and second duration based on a specific user. In this way, a user habit can be better satisfied, thereby improving user experience.

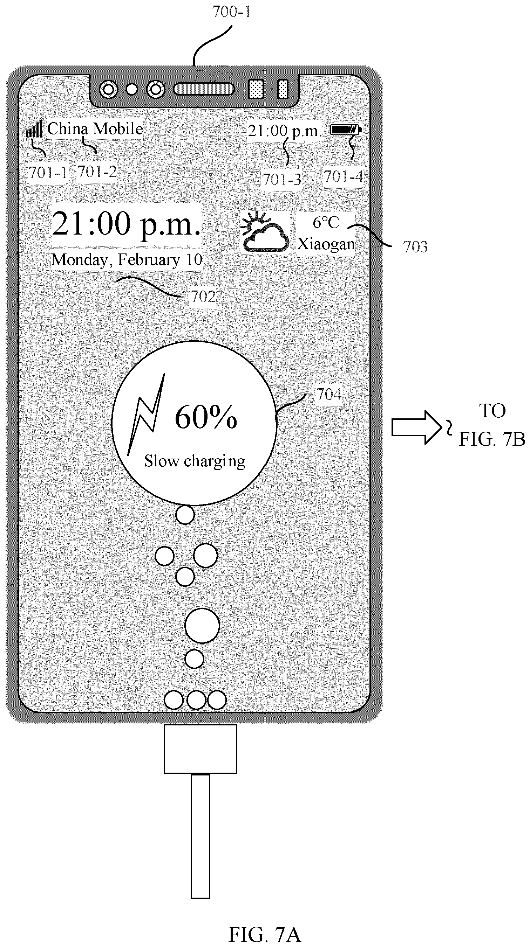

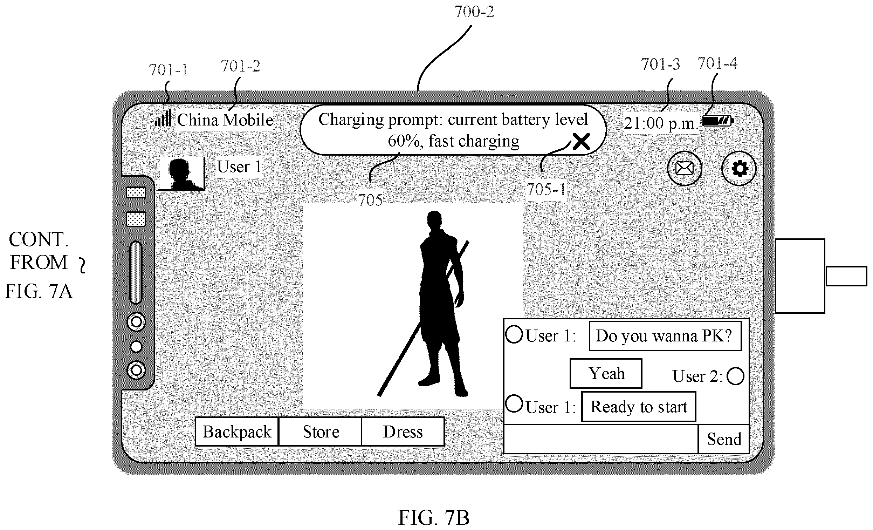

FIG. 7A and FIG. 7B are a schematic diagram of a user interface for charging a battery by an electronic device when a user uses the electronic device. As shown in a user interface 700-1, in this case, the battery level is 60%, and the electronic device performs slow charging on the battery. In this case, as shown in the user interface 700-2, if the user starts a game application to play a game, the electronic device re-determines duration of performing fast charging and slow charging on the battery. The electronic device may change from the slow charging state to the fast charging state. As shown in a user interface 700-2, a charging prompt box 705 is displayed on the user interface, and the prompt box 705 may display a prompt text, for example, "current battery level 60%, fast charging". A control element 705-1 may be further displayed in the prompt box 705, and the user may close the prompt box 705 by using the control element 705-1.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A charging management and control method, comprising:

    obtaining, by an electronic device, first data in response to detecting that an external power supply is connected, wherein the first data is used to represent a status when the electronic device detects that the external power supply is connected;
    starting, by the electronic device, to perform charging in response to detecting that the external power supply is connected;
    determining, by the electronic device, first duration and second duration based on the first data, wherein the first duration is used to represent predicted charging duration for which the electronic device performs charging based on a first charging parameter, and the second duration is used to represent predicted charging duration for which the electronic device performs charging based on a second charging parameter;
    performing, by the electronic device, charging based on the first charging parameter, wherein duration of the charging is first actual charging duration, and the first actual charging duration is used to represent actual charging duration for which the electronic device performs the charging based on the first charging parameter; and
    performing, by the electronic device, charging based on the second charging parameter when the first actual charging duration is equal to the first duration, wherein duration of the charging is second actual charging duration, and the second actual charging duration is used to represent actual charging duration for which the electronic device performs charging based on the second charging parameter; wherein
    charging efficiency with which the electronic device performs charging based on the first charging parameter is higher than charging efficiency with which the electronic device performs charging based on the second charging parameter.

2. The method according to claim 1, wherein after the performing, by the electronic device, charging based on the second charging parameter, wherein duration of the charging is second actual charging duration, the method further comprises:
performing, by the electronic device, charging based on the first charging parameter when the second actual charging duration is equal to the second duration.

3. The method according to claim 1, wherein the first data comprises one or more of: a time at which the external power supply is connected, a remaining battery level when the electronic device detects that the external power supply is connected, a charger type, a time zone in which the electronic device is located, screen-on/screen-off information of the electronic device, an alarm clock ringing time that is set in the electronic device, a to-do list reminder time point that is set in the electronic device, and sensor data of the electronic device.

4. The method according to any one of claims 1 to 3, wherein the first data comprises the time at which the external power supply is connected, and the time at which the external power supply is connected is within a night time period.

5. The method according to claim 4, wherein the night time period is 23:00 p.m. to 6:00 a.m..

6. The method according to any one of claims 1 to 5, wherein the method further comprises:

    in response to detecting a first event, stopping, by the electronic device, to perform charging based on the second charging parameter, and starting to perform charging based on a third charging parameter, wherein charging efficiency with which the electronic device performs charging based on the third charging parameter is higher than the charging efficiency with which the electronic device performs charging based on the second charging parameter, and
    the first event comprises one or more of the following: a quantity of screen-on times of the electronic device is greater than a first threshold; screen-on duration of the electronic device is greater than a second threshold; a quantity of screen-off times of the electronic device is greater than a third threshold; screen-off duration of the electronic device is less than a fourth threshold; power consumption of the electronic device is greater than a fifth threshold; the electronic device starts or uses a video application; or the electronic device starts or uses a game application.

7. The method according to claim 6, wherein the starting to perform charging based on a third charging parameter specifically comprises:

performing, by the electronic device, charging based on the third charging parameter, wherein duration of the charging is third actual charging duration, and the third actual charging duration is used to represent actual charging duration for which the electronic device performs the charging based on the third charging parameter; and performing, by the electronic device, charging based on a fourth charging parameter when the third actual charging duration is equal to the third duration, wherein duration of the charging is fourth actual charging duration, the third duration is used to represent predicted charging duration for which the electronic device performs the charging based on the third charging parameter, and the fourth actual charging duration is used to represent actual charging duration for which the electronic device performs the charging based on the fourth charging parameter; wherein

the charging efficiency with which the electronic device performs charging based on the third charging parameter is higher than a charging parameter with which the electronic device performs the charging based on the fourth charging parameter; and

the third duration is determined by using second data, and the second data is used to represent a status of the electronic device when the electronic device detects the first event.

8. The method according to claim 7, wherein the second data comprises one or more of: a time at which the electronic device detects the first event, a remaining battery level of the electronic device when the electronic device detects the first event, the charger type, the time zone in which the electronic device is located, screen-on/screen-off information of the electronic device, the alarm time that is set in the electronic device, the to-do list time that is set in the electronic device, and the sensor data of the electronic device.

9. The method according to any one of claims 1 to 8, wherein the method further comprises:

in response to detecting a second event, performing, by the electronic device, charging based on the first charging parameter, wherein the second event is used to represent a user-preset time recorded by the electronic device; performing, by the electronic device, charging based on the second charging parameter when the remaining battery level of the electronic device reaches a first threshold through charging; and

performing, by the electronic device, charging based on a fifth charging parameter when a first time arrives, wherein the first time is a time before the user-preset time.

10. The method according to claim 9, wherein the second event comprises one or more of: the alarm clock ringing time, a reminder time point specified in a memo, a time point specified in a schedule, and the to-do list reminder time point that are set in the electronic device.

11. The method according to any one of claims 1 to 10, wherein the performing, by the electronic device, charging based on the second charging parameter specifically comprises:
performing charging or stopping charging by the electronic device based on the second charging parameter.

12. The method according to any one of claims 1 to 11, wherein the first charging parameter comprises a first charging cut-off voltage and first charging input power, the second charging parameter comprises a second charging cut-off voltage and second charging input power, the first charging cut-off voltage is greater than the second charging cut-off voltage, and the first charging input power is greater than the second charging input power.

13. The method according to any one of claims 1 to 12, wherein the third charging parameter and the fifth charging parameter are the same as the first charging parameter, and the fourth charging parameter is the same as the second charging parameter.

14. The method according to any one of claims 1 to 13, wherein a sum of the first duration and the second duration is not less than a sixth threshold.

15. The method according to any one of claims 1 to 14, wherein before the performing, by the electronic device, charging based on the first charging parameter, wherein duration of the charging is first actual charging duration, the method further comprises:

determining, by the electronic device, that no alarm clock is set in the electronic device in a first time period after the external power supply is connected, that the external power supply is in a connected state in a time period from 23:00 p.m. to 6:00 a.m., and that the sum of the first duration and the second duration is greater than 4 hours; and

the performing, by the electronic device, charging based on the first charging parameter, wherein duration of the charging is first actual charging duration specifically comprises:

if the electronic device determines that an alarm clock is set in the electronic device in the first time period after the external power supply is connected, performing, by the electronic device, charging based on the first charging parameter until the remaining battery level of the electronic device is 80%, and stopping charging by the electronic device; and

if a time at which the remaining battery level of the electronic device reaches 80% through charging is earlier than half an hour before the alarm clock ringing time arrives, performing, by the electronic device, charging based on the first charging parameter half an hour before the alarm clock ringing time arrives, to charge the electronic device until the alarm clock ringing time.

16. The method according to claim 15, wherein the performing, by the electronic device, charging based on the second charging parameter, wherein duration of the charging is second actual charging duration, further comprises:

if the second actual charging duration is less than the second duration, and the electronic device detects that a time of the time zone in which the electronic device is located is 6:00, stopping, by the electronic device, charging based on the second charging parameter.

17. The method according to any one of claims 1 to 16, wherein the determining, by the electronic device, first duration and second duration based on the first data comprises:

inputting, by the electronic device, first predicted charging duration into a second charging model to obtain the first duration and the second duration, wherein the first predicted charging duration is determined by the electronic device based on the first data, and training data of the second charging model comprises second input data and second output data; wherein

the second input data comprises second predicted charging duration, the second predicted charging duration is determined based on first historical charging data of a first user, and the first historical charging data comprises one or more of: a time at which the electronic device starts to charge the battery, a battery level when the electronic device starts to charge the battery, a charger type, actual charging duration of charging the battery by the electronic device, a time zone in which the electronic device is located, average charging duration in a week, power consumption of the electronic device, sensor information, and whether a charging time is during a holiday; and

the second output data comprises the first charging duration and the second charging duration, the first charging duration is obtained by subtracting a first correction from the actual charging duration of the first user, the second charging duration is equal to the first correction, and the first correction is determined based on a confidence level of a first charging model.

18. The method according to claim 17, wherein that the second predicted charging duration is determined based on first historical charging data of a first user specifically comprises: the second predicted duration is calculated by inputting the first historical data by the electronic device into the first charging model, wherein training data of the first charging model comprises first input data and the second input data, and the first input data comprises second historical charging data of a plurality of users; and

the second historical charging data comprises one or more of: a time at which the electronic device starts to charge the battery, a battery level when the electronic device starts to charge the battery, a charger type, actual charging duration of charging the battery by the electronic device, a time zone in which the electronic device is located, average charging duration in a week, power consumption of the electronic device, sensor information, and whether a charging time is during a holiday.

19. An electronic device, comprising one or more touchscreens, one or more memories, and one or more processors, wherein the one or more memories store one or more programs, and when the one or more processors execute the one or more programs, the electronic device is enabled to implement the method according to any one of claims 1 to 18.

20. A computer storage medium, comprising computer instructions, wherein when the computer instructions are run on an electronic device, the electronic device is enabled to perform the method according to any one of claims 1 to 18.

Connect for charging    Charging management and control     End the management and control and resume charging    End charging (predicted)    End charging (actual)

FIG. 1

**Electronic device 100**

Displays 1 to N [194]

Processor [110]

Sensor module [180]

Gyroscope sensor [180B]

Magnetic sensor [180D]

Acceleration sensor [180E]

USB interface [130]

Charging input

Charging management module [140]

Power management module [141]

Battery [142]

FIG. 2

S101. An electronic device detects that an external power supply is connected, and obtains first data

S102. The electronic device obtains first duration and second duration based on the first data

S103. The electronic device charges a battery based on a first charging parameter

S104. The electronic device determines whether a time for which the electronic device charges the battery based on the first charging parameter reaches the first duration

No

Yes

S105. The electronic device charges the battery based on a second charging parameter

S106. The electronic device determines whether a time for which the electronic device charges the battery based on the second charging parameter reaches the second duration

No

Yes

S107. The electronic device continues to charge the battery based on the first charging parameter

S108. The electronic device detects that the electronic device is disconnected from the external power supply, and stops charging the battery

FIG. 3

400

China Mobile

8:08 a.m.

401-1  401-2

401-3  401-4

# 8:08 a.m.
Monday, February 10

6°C
Xiaogan

403

402

10%
Remaining
charging time:
1 hour and 30
minutes

404

FIG. 4

500-1

FIG. 5A

500-2

| 501-1 | 501-2 | 501-3 | 501-4 |

ılll China Mobile

21:00 p.m.

## 21:00 p.m.
Monday, February 10

502

6°C
Xiaogan

503

10%

Fast charging

504

FIG. 5B

500-2

511| China Mobile       21:00 p.m.

501-1   501-2

501-3   501-4

## 21:00 p.m.
Monday, February 10

6°C
Xiaogan

503

502

10%

Fast charging

504

TO
FIG. 5C-2

FIG. 5C-1

500-3

501-1  501-2

llll China Mobile

22:00 p.m.

501-3  501-4

22:00 p.m.

Monday, February 10

6°C
Xiaogan

503

502

CONT.
FROM
FIG. 5C-1

504

70%

Slow charging

FIG. 5C-2

FIG. 5D-1

500-4

ull China Mobile

501-1  501-2

06:40 a.m.

501-3  501-4

06:40 a.m.

Tuesday, February 11

502

6°C
Xiaogan

503

CONT.
FROM
FIG. 5D-1

90%

504

Fast charging

FIG. 5D-2

500-4

China Mobile

501-1 501-2

06:40 a.m.

501-3 501-4

06:40 a.m.

Tuesday, February 11

502

6°C
Xiaogan

503

90%

Fast charging

504

TO
FIG. 5E-2

FIG. 5E-1

500-5

ı.ıll China Mobile

501-1  501-2

07:00 a.m.

501-3  501-4

07:00 a.m.

Tuesday, February 11

502

6°C
Xiaogan

503

100%

Charging
completed

504

FIG. 5E-2

500-6

China Mobile    07:00 a.m.

501-1  501-2    501-5  501-3  501-4

07:00 a.m.
Tuesday, February 11

6°C
Xiaogan    503

502

Alarm    505

Alarm 10 minutes later

100%
Charging
completed

504

Slide to turn off an alarm    506

FIG. 5F

600-1

FIG. 6A

600-2

illl China Mobile

601-1  601-2

21:00 p.m.

601-3  601-4

21:00 p.m.
Monday, February 10

602

16°C
Shenzhen

603

10%
Fast charging

604

FIG. 6B

600-2

China Mobile

601-1    601-2

21:00 p.m.

601-3    601-4

21:00 p.m.

Monday, February 10

602

16°C
Shenzhen

603

10%

Fast charging

604

TO
FIG. 6C-2

FIG. 6C-1

CONT.
FROM
FIG. 6C-1

FIG. 6C-2

FIG. 6D-1

600-4

601-1  601-2

China Mobile

06:20 a.m.

601-3  601-4

06:20 a.m.

Tuesday, February 11

602

16°C
Shenzhen

603

CONT.
FROM
FIG. 6D-1

92%

Fast charging

604

FIG. 6D-2

600-4

China Mobile

601-1  601-2

06:20 a.m.

601-3  601-4

06:20 a.m.

Tuesday, February 11

16℃
Shenzhen

603

602

92%

Fast charging

604

TO
FIG. 6E-2

FIG. 6E-1

600-5

601-1  601-2

601-3  601-4

il China Mobile

06:36 a.m.

06:36 a.m.
Tuesday, February 11

602

16°C
Shenzhen

603

CONT.
FROM
FIG. 6E-1

100%
Charging
completed

604

FIG. 6E-2

FIG. 7A

EP 4 113 780 A1

701-1 701-2 700-2 701-3 701-4

CONT. FROM FIG. 7A

China Mobile

Charging prompt: current battery level 60%, fast charging ✕

21:00 p.m.

User 1

705

705-1

User 1: Do you wanna PK?

Yeah   User 2: ○

User 1: Ready to start

Backpack   Store   Dress

Send

FIG. 7B

## INTERNATIONAL SEARCH REPORT

| | |
|---|---|
| International application No. | |
| | **PCT/CN2021/079536** |

### A. CLASSIFICATION OF SUBJECT MATTER

H02J 7/00(2006.01)i

According to International Patent Classification (IPC) or to both national classification and IPC

### B. FIELDS SEARCHED

Minimum documentation searched (classification system followed by classification symbols)

H02J7/-

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 充电, 时间, 神经网络, 预估, charge, time, neural network, estimate

### C. DOCUMENTS CONSIDERED TO BE RELEVANT

| Category* | Citation of document, with indication, where appropriate, of the relevant passages | Relevant to claim No. |
|---|---|---|
| X | WO 2018215864 A1 (SEMICONDUCTOR ENERGY LABORATORY CO., LTD.) 29 November 2018 (2018-11-29)<br>description, paragraphs 39-66, and figures 1-2 | 1-20 |
| X | CN 105684260 A (QUALCOMM INC.) 15 June 2016 (2016-06-15)<br>description, paragraphs 30-82, and figures 1-10 | 1-5, 11-12, 14, 17-20 |
| Y | CN 105684260 A (QUALCOMM INC.) 15 June 2016 (2016-06-15)<br>description, paragraphs 30-82, and figures 1-10 | 6-10, 13, 15-16 |
| Y | CN 104378497 A (LG ELECTRONICS INC.) 25 February 2015 (2015-02-25)<br>description, paragraphs 29-150, and figures 1-19 | 6-10, 13, 15-16 |
| A | US 2019379212 A1 (LG ELECTRONICS INC.) 12 December 2019 (2019-12-12)<br>entire document | 1-20 |
| A | CN 104158272 A (CIVIL AVIATION UNIVERSITY OF CHINA) 19 November 2014 (2014-11-19)<br>entire document | 1-20 |

| | |
|---|---|
| ☐ Further documents are listed in the continuation of Box C. | ☑ See patent family annex. |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2021** | **26 May 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/079536**

| Patent document cited in search report | | | Publication date (day/month/year) | Patent family member(s) | | | Publication date (day/month/year) |
|---|---|---|---|---|---|---|---|
| WO | 2018215864 | A1 | 29 November 2018 | US | 2020076223 | A1 | 05 March 2020 |
| | | | | JP | WO2018215864 | A1 | 09 April 2020 |
| CN | 105684260 | A | 15 June 2016 | JP | 6486916 | B2 | 20 March 2019 |
| | | | | US | 2015123595 | A1 | 07 May 2015 |
| | | | | EP | 3066743 | B1 | 20 December 2017 |
| | | | | JP | 2016537877 | A | 01 December 2016 |
| | | | | KR | 20160078496 | A | 04 July 2016 |
| | | | | EP | 3066743 | A1 | 14 September 2016 |
| | | | | TW | 201539932 | A | 16 October 2015 |
| | | | | WO | 2015063340 | A1 | 07 May 2015 |
| | | | | TW | I660555 | B | 21 May 2019 |
| | | | | CN | 105684260 | B | 10 December 2019 |
| | | | | BR | 112016009984 | A2 | 01 August 2017 |
| CN | 104378497 | A | 25 February 2015 | EP | 2843793 | B1 | 25 October 2017 |
| | | | | KR | 102108063 | B1 | 08 May 2020 |
| | | | | EP | 2843793 | A2 | 04 March 2015 |
| | | | | US | 9531201 | B2 | 27 December 2016 |
| | | | | KR | 20150019295 | A | 25 February 2015 |
| | | | | US | 2015048803 | A1 | 19 February 2015 |
| US | 2019379212 | A1 | 12 December 2019 | KR | 20190086630 | A | 23 July 2019 |
| CN | 104158272 | A | 19 November 2014 | CN | 104158272 | B | 19 October 2016 |

Form PCT/ISA/210 (patent family annex) (January 2015)

**EP 4 113 780 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010203685